Europäisches Patentamt

European Patent Office

Office européen des brevets

(11) Numéro de publication: **0 270 706 B1**

# FASCICULE DE BREVET EUROPEEN

(45) Date de publication de fascicule du brevet: **24.03.93** (51) Int. Cl.5: **H04B 3/23**

(21) Numéro de dépôt: **86202106.0**

(22) Date de dépôt: **09.06.83**

(60) Numéro de publication de la demande initiale en application de l'article 76 CBE : **0 096 936**

(54) **Procédé destiné à réduire le temps de convergence d'un annuleur d'écho.**

(30) Priorité: **14.06.82 FR 8210310**

(43) Date de publication de la demande:
**15.06.88 Bulletin 88/24**

(45) Mention de la délivrance du brevet:
**24.03.93 Bulletin 93/12**

(84) Etats contractants désignés:
**CH DE FR GB IT LI SE**

(56) Documents cités:
**EP-A- 0 036 696**
**EP-A- 0 052 362**
**GB-A- 2 029 175**
**US-A- 4 047 013**

**IBM TECHNICAL DISCLOSURE BULLETIN, vol. 21, no. 5, octobre 1978, pages 1916-1918, New York, US; A. DESBLACHE et al.: "Centering transversal equalizer tap coefficients"**

**IEEE FIFTH INTERNATIONAL CONFERENCE ON DIGITAL SATELLITE COMMUNICATIONS, Genoa, 23-26 mars 1981, pages 259-264; M. COPPERI et al.: "A new approach for a microprogrammed echo canceller"**

(73) Titulaire: **TELECOMMUNICATIONS RADIOE-LECTRIOUES ET TELEPHONIOUES T.R.T.**
**88, rue Brillat Savarin**
**F-75013 Paris(FR)**

(84) Etats contractants désignés:
**CH DE GB IT LI SE**

(73) Titulaire: **TRT TELECOMMUNICATIONS RA-DIOELECTRIOUES ET TELEPHONIOUES**
**88 rue Brillat Savarin**
**F-75013 Paris(FR)**

(84) Etats contractants désignés:
**FR**

(72) Inventeur: **Guidoux, Loic Bernard Yves Société Civile S.P.I.D.**
**209, rue de l'Université**
**F-75007 Paris(FR)**

(74) Mandataire: **Chaffraix, Jean et al**
**Société Civile S.P.I.D. 156, Boulevard Haussmann**
**F-75008 Paris (FR)**

EP 0 270 706 B1

## Description

L'invention concerne un procédé destiné à réduire le temps de convergence d'un annuleur d'écho faisant partie d'un système comprenant au moins deux équipements émetteurs-récepteur dont un est dit équipement local et l'autre équipement distant, cet annuleur d'écho qui est connecté dans un équipement émetteur-récepteur entre deux voies unidirectionnelles émission et réception couplées à une voie bidirectionnelle et qui est utilisé pour annuler un signal d'écho se produisant avec une dérive de fréquence dans la voie réception en réponse à un signal fourni à la voie émission, comprenant un filtre transversal à N coefficients réglables traitant un signal déduit du signal fourni à la voie émission, un circuit de différence pour former un signal de différence entre deux signaux formés respectivement à partir du signal dans la voie réception et du signal de sortie du filtre transversal, et un circuit déphaseur qui est connecté entre la sortie du filtre transversal et une entrée du circuit de différence et qui reçoit d'un générateur de phase, une phase simulée pour compenser dans le signal de différence la phase du signal d'écho, ce procédé étant basé :

- sur l'émission dans l'équipement local d'un signal de données d'apprentissage D(n) formé de données émises à des instants nT, se reproduisant périodiquement après une durée LT au moins égale à NT et répondant à la propriété P1 :

$$\sum_{n=0}^{L-1} d(n).d^*[(n-i)\bmod L] = 0 \text{ pour } i \neq 0 \text{ et } 1 < i < N-1$$

ou à la propriété P2 :

$$\sum_{n=0}^{L-1} d(n).d^*[(n-i)\bmod L] = -1 \text{ pour } i \neq 0 \text{ et } 1 < i < N-1,$$

d et d* étant respectivement la valeur d'une donnée du signal D(n) et sa valeur conjuguée.

- sur le calcul des coefficients du filtre transversal est effectué après l'instant d'apparition du signal d'écho engendré par ledit signal d'apprentissage, selon l'expression :

$$\vec{C} = \vec{C_0} + \frac{1}{L\sigma^2} \sum_{n=0}^{L-1} e(n).\vec{D^*}(n)$$

$\vec{C_0}$ et $\vec{C}$ étant respectivement les vecteurs des N coefficients du filtre transversal au début et à la fin de la durée de calcul des coefficients,
e(n) étant le signal de différence,
D* étant le vecteur des valeurs conjuguées des N données emmagasinées dans le filtre transversal,
$\sigma^2$ étant un terme constant, représentatif de la puissance de chaque donnée émise.

Les annuleurs d'écho sont utilisés par exemple dans les modems de transmission de données dont les voies émission et réception formant ensemble un accès quatre fils sont souvent couplées par un circuit de couplage, de façon que chaque modem ait avec l'extérieur un accès deux fils. On sait que lorsqu'on établit une liaison entre deux modems par leurs accès deux fils, il peut se produire dans la voie réception de chaque modem un signal intempestif, appelé signal d'écho, qui est une fraction du signal émis dans la voie émission du même modem et qui est dû à des imperfections du circuit de couplage et/ou à des réflexions dans la liaison. Un annuleur d'écho a pour but d'annuler automatiquement ce signal d'écho, afin de permettre une transmission en duplex simultané, entre deux modems reliés par leurs accès deux fils.

Dans un annuleur d'écho, le filtre transversal a ses coefficients qui sont commandés pour minimiser la valeur quadratique moyenne du signal de différence ou signal d'erreur apparaissant à la sortie du circuit de différence. Lorsque l'annuleur d'écho a convergé, les coefficients du filtre transversal sont pratiquement égaux à des échantillons de la réponse impulsionnelle du chemin d'écho et le filtre transversal fournit un signal de copie d'écho pratiquement égal au signal d'écho aux instants d'échantillonnage.

Pour obtenir une convergence rapide on utilise un signal de données d'apprentissage de type particulier, soit pour répondre a la propriété P1 comme cela est indiqué dans un premier article : "Centering transversal Equalizer Tap Coefficients" de A. Desblache et P. Thirion, paru dans IBM Technical Disclosure Bulletin-vol.21, N°5, octobre 1978, soit pour répondre à la propriété P2 ; en ce cas le signal de données d'apprentissage est une des séquences de données connues sous le nom de séquences de longueur maximale, comme cela est décrit dans un deuxième article intitulé "A New Approach for A Microprogrammed Echo Canceller" de M. COPPERI et paru dans IEEE FIFTH INTERNATIONAL CONFERENCE ON DIGITAL SATELLITE COMMUNICATIONS, 23-26 mars 1981, pages 259-264, Genoa, ITALIE.

Mais ces procédés ne permettent pas de résoudre de façon satisfaisante le problème de l'annulation d'un signal d'écho à phase variable. Dans le premier article précité ce problème n'est même pas mentionné tandis que dans le deuxième, ce problème est résolu par l'utilisation d'un générateur du signal de fréquence de référence dont on mesure la dérive en fréquence pour pouvoir la compenser par la suite. Il est à noter que la transmission d'un signal analogique n'est pas souhaitable lorsque l'on a affaire à des modems de transmission de données.

La présente invention propose un procédé qui évite la présence de ce générateur de signal de fréquence de référence. Pour cela un tel procédé est remarquable en ce qu'il comporte au moins les opérations suivantes :

- l'émission dudit signal d'apprentissage D(n) pendant deux intervalles de temps [p_1], [P_2] ayant chacun ladite durée LT, au cours desquels la phase du signal d'écho a des valeurs $\phi(p_1)$, $\phi(p_2)$ qui sont chacune sensiblement constantes, l'écart entre ces deux intervalles étant choisi de sorte que $\phi(p_2) - \phi(p_1)$ soit une quantité appréciable ;
- pendant l'intervalle de temps [p_1], le calcul des coefficients du filtre transversal,
- pendant l'intervalle de temps [p_2]
  . le maintien à leurs valeurs calculées des coefficients du filtre transversal,
  . le maintien à zéro de la phase simulée appliquée audit circuit déphaseur,
  . le calcul d'une quantité $s(p_2)$ formée en accumulant des produits de deux facteurs déduits l'un du signal de sortie du circuit déphaseur, l'autre du signal de différence (ou du signal reçu) ;
- à la fin de l'intervalle de temps [p_2], un traitement pour déduire de la quantité $s(p_2)$ le terme de différence de phase $\phi(p_2) - \phi(p_1)$ et un traitement pour déduire de cette différence de phase un terme de variation de phase $\Delta\omega.T$ formé en utilisant l'expression :

$$\Delta\omega = \frac{\phi(p_2) - \phi(p_1)}{t_2 - t_1}$$

$\Delta\omega$ étant la variation de pulsation correspondant à la dérive de fréquence, $t_2-t_1$ étant l'écart de temps moyen entre les intervalles de temps [p_2] et [p_1], les deux termes ainsi formés étant utilisés pour l'initialisation dudit circuit générateur de phase.

La description suivante en regard des dessins annexés, le tout donné à titre d'exemple, fera bien comprendre comment l'invention peut être réalisée.

La figure 1 montre la structure d'un annuleur d'écho implanté dans un modem.

La figure 2 montre un mode de réalisation du dispositif de calcul des coefficients.

La figure 3 est un diagramme de signaux destiné à expliquer le fonctionnement du dispositif du calcul des coefficients.

Les figures 4 et 5 montrent deux autres modes de réalisation du dispositif de calcul des coefficients.

La figure 6 montre la structure générale d'un annuleur d'écho avec dérive de fréquence auquel peut s'appliquer le procédé de l'invention.

La figure 7 représente en fonction du temps la phase d'un signal d'écho avec dérive de fréquence, afin d'illustrer le procédé de l'invention.

La figure 8 montre le dispositif mettant en oeuvre le procédé de l'invention dans un annuleur d'écho avec dérive de fréquence.

Les figures 9 et 10 montrent deux modes de réalisation du circuit de traitement fournissant une différence de phase et une variation de phase pour initialiser un annuleur d'écho avec dérive de fréquence.

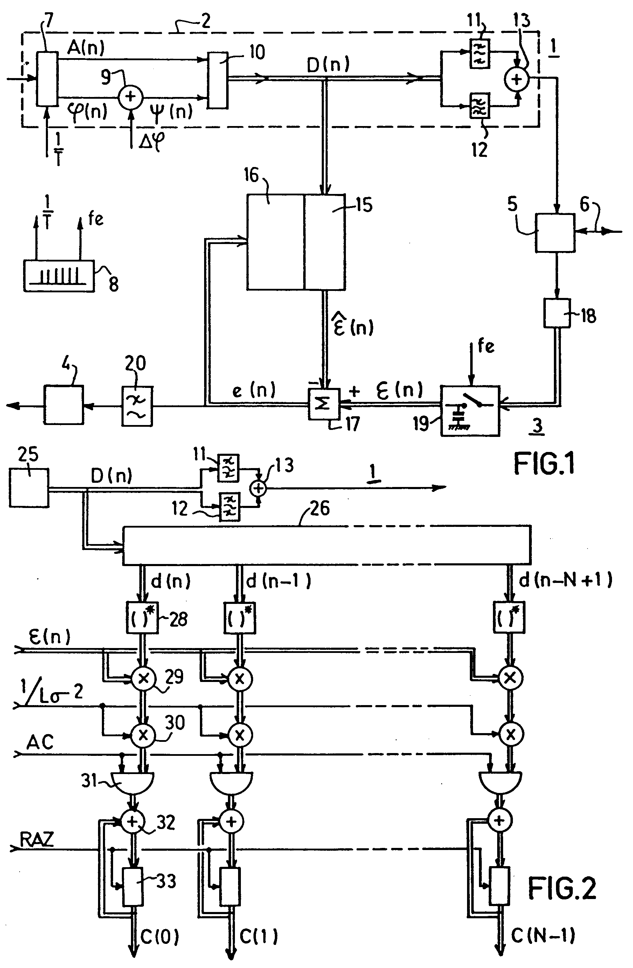

Le modem muni d'un annuleur d'écho dont le schéma est représenté à la figure 1 comporte une voie émission 1 munie d'un modulateur 2 recevant des données provenant d'un terminal non représenté et une voie réception 3 munie d'un récepteur 4 fournissant des données à ce terminal. La sortie du modulateur 2 est reliée à l'accès émission du circuit de couplage 5 et l'accès réception de ce circuit de couplage est relié, par l'intermédiaire d'un certain nombre d'éléments décrits par la suite, à l'entrée du récepteur 4. Ce circuit de couplage 5 permet de coupler les deux voies émission et réception du modem à la voie bidirectionnelle 6, pour des liaisons en duplex simultané avec un modem distant, couplé de la même manière à la voie de transmission 6.

Lorsque le modulateur 2 émet dans la voie émission 1 un signal modulé par les données à transmettre vers le modem distant, il peut se produire dans la voie réception 3 un signal d'écho intempestif provenant d'imperfections du circuit de couplage 5 ou de réflexions dans la voie de transmission 6 et pouvant perturber dans le récepteur 4 la démodulation du signal reçu en provenance du modem distant. L'annuleur d'écho incorporé dans le modem de la figure 1 est chargé d'éliminer le signal d'écho dans la voie réception 3. On suppose pour l'instant que le signal d'écho est de type linéaire, c'est-à-dire que dans le trajet d'écho auquel est appliqué le signal de sortie du modulateur, il ne se produit que des opérations à caractère linéaire, ne faisant pas varier la phase ou la fréquence du signal.

L'annuleur d'écho de la figure 1 utilise un signal de données complexe correspondant aux données appliquées au modulateur. En supposant par exemple que le modem utilise pour la transmission des données la modulation de phase ou de phase et d'amplitude, le signal de données complexe utilisé dans l'annuleur d'écho peut être prélevé dans un modulateur 2 constitué de la façon suivante. Ce modulateur comporte un circuit de codage 7 recevant les données à transmettre et fournissant une paire de signaux représentatifs des amplitudes A(n) et des changements de phase $\phi$(n) à affecter à la porteuse en fonction des données, à des instants nT déterminés par le générateur 8 de la fréquence 1/T, 1/T étant la cadence de modulation et n un nombre entier variable de $-\infty$ à $+\infty$. Pour tenir compte de la variation de phase $\Delta\phi$ de la porteuse pendant chaque intervalle de modulation T, on utilise un circuit additionneur 9 pour fournir à chaque instant nT, la somme $\phi$(n) + $\Delta\phi$, qui est représentative de la phase absolue $\psi$(n) de la porteuse modulée à émettre. Les deux signaux A(n) et $\psi$(n) sont appliqués au circuit 10 qui forme la composante réelle A(n)cos$\psi$(n) et la composante imaginaire A(n)sin$\psi$(n) d'un signal complexe noté D(n). Dans le modulateur 2, ces deux composantes sont appliquées aux filtres passe-bande 11 et 12 dont les signaux de sortie sont additionnés dans le circuit additionneur 13 pour former le signal analogique de porteuse modulé qui est dirigé vers l'accès émission du circuit de couplage 5.

Le signal complexe D(n) ainsi formé dans le modulateur 2 est utilisé également dans l'annuleur d'écho. On doit noter ici que dans les différents schémas de la présente demande de brevet, les liaisons représentées par un trait double transportent les deux composantes réelle et imaginaire d'un signal complexe, mais le plus souvent on ne parlera que des signaux complexes transportés par ces liaisons. D'autre part, dans des circuits de traitement traitant des nombres complexes, on n'explicitera généralement pas les traitements effectués dans la pratique à partir des composantes réelles et imaginaires de ces nombres complexes.

L'annuleur d'écho inclus dans le modem de la figure 1 comporte un filtre transversal 15 qui reçoit le signal complexe D(n) échantillonné aux instants nT et que l'on suppose par exemple de type analogique. Le filtre transversal 15 est muni d'un circuit de réglage 16 de ses coefficients. Le signal complexe sortant du filtre 15 est appliqué à l'entrée (-) du circuit de différence 17. A l'entrée ( + ) de ce circuit 17, sont appliqués des échantillons d'un signal analogique, complexe dans le cas général et formé à partir du signal apparaissant à l'accès réception du circuit de couplage 5. Pour former ces échantillons, on utilise un circuit 18 qui fournit un signal complexe dont la partie réelle est le signal provenant du circuit de couplage 5 et dont la partie imaginaire est ce même signal déphasé de 90°. Le signal complexe fourni par le circuit 18 est appliqué au circuit d'échantillonnage et de maintien 19 dans lequel l'échantillonnage est effectué à une fréquence $f_e$ fournie par le générateur 8. Cette fréquence $f_e$ est multiple de la fréquence de modulation 1/T et telle que le théorème de Shannon soit respecté vis à vis du signal d'écho, c'est-à-dire vis à vis du signal fourni par le modulateur 2. Toutefois, pour simplifier les explications, on ne considère par la suite, parmi les échantillons fournis par le circuit 19, que ceux qui se produisent à la fréquence 1/T, aux mêmes instants nT que les échantillons du signal de données D(n), étant entendu que les autres suites d'échantillons à la fréquence 1/T doivent être traitées de la même manière.

Le signal de différence complexe fourni par le circuit de différence 17 est appliqué au circuit de réglage 16, dans lequel il est utilisé pour régler les coefficients du filtre transversal 15. Lorsque ces coefficients sont convenablement réglés, le signal de copie d'écho fourni par le filtre transversal 15 est substantiellement égal à la version complexe du signal d'écho apparaissant sur l'accès réception du circuit de couplage 5 de sorte que dans le signal de différence apparaissant à la sortie du circuit 17, le signal d'écho est pratiquement annulé. De ce signal de différence complexe et ainsi débarrassé du signal d'écho, le récepteur 4 du modem n'utilise que la composante réelle, préalablement filtrée dans le filtre passe-bas 20.

Pour préciser le fonctionnement d'un tel annuleur d'écho et expliquer comment on peut lui appliquer le procédé de l'invention, il est pratique d'indiquer les calculs à effectuer, en utilisant la notation vectorielle. Ainsi, si le filtre transversal 15 stocke à un instant nT, les N échantillons précédents du signal de données D(n) appliqué à son entrée, ces N échantillons peuvent se représenter par le vecteur $\vec{D}$(n). Les N coefficients de ce filtre 15 à un instant nT peuvent également se représenter par un vecteur $\vec{C}$(n).

4

Avec cette notation, le signal de copie d'écho $\hat{\epsilon}(n)$ fourni par le filtre transversal résulte de l'opération :

$$\epsilon(n) = \underset{\rightarrow}{D}(n).\vec{C}(n) \qquad\qquad (1)$$

$\underset{\rightarrow}{D}(n)$ étant la transposée du vecteur $\vec{D}(n)$.

On peut également définir un vecteur $\vec{k}$ ayant N composantes qui sont des échantillons de réponse impulsionnelle du trajet d'écho auquel est appliqué le signal de données D(n). On peut alors écrire que le signal d'écho complexe $\epsilon(n)$ apparaissant à l'entrée ( + ) du circuit de différence 17, résulte de l'opération :

$$\epsilon(n) = \underset{\rightarrow}{D}(n).\vec{k} \qquad\qquad (2)$$

On suppose pour l'instant que le modem distant n'émet aucun signal de données pouvant se superposer au signal d'écho $\epsilon(n)$. Le signal d'erreur e(n) apparaissant à la sortie du circuit de différence 17 s'écrit alors :

$$e(n) = \epsilon(n) - \epsilon(n) = \underset{\rightarrow}{D}(n)[\vec{k} - \vec{C}(n)]$$

Ce signal d'erreur e(n) est annulé si

$$\vec{C}(n) = \vec{k}.$$

Pour arriver pratiquement à ce résultat, qui signifie que le signal d'écho est annulé, on utilise dans les annuleurs d'écho connus le critère qui consiste à minimiser la valeur quadratique moyenne du signal d'erreur e(n) et qui se traduit, en utilisant l'algorithme du gradient, par un réglage des coefficients du filtre transversal 15, par récurrences successives, suivant la formule de récurrence :

$$\vec{C}(n+1) = \vec{C}(n) + \alpha.e(n).\vec{D}^*(n) \qquad\qquad (3)$$

$\alpha$ étant un coefficient inférieur à 1,
$\vec{D}^*(n)$ étant un vecteur dont les composantes sont conjuguées de celles du vecteur $\vec{D}(n)$.
En utilisant les formules (1) et (2) la formule de récurrence (3) peut aussi s'écrire :

$$\vec{C}(n+1) = \vec{C}(n) + \alpha.\overline{\overline{A}}(n).[\vec{k}-\vec{C}(n)] \qquad\qquad (4)$$

$\overline{\overline{A}}(n)$ étant une matrice d'ordre N, telle que :

$$\overline{\overline{A}}(n) = \underset{\rightarrow}{\vec{D}}(n)\,\underset{\rightarrow}{D}^*(n) \qquad\qquad (5)$$

Si l'on appelle d(n-i) et d*(n-j) les composantes des vecteurs $\vec{D}(n)$ et $\vec{D}^*(n)$ avec i et j entiers allant de 0 à N-1, les composantes de la matrice $\overline{\overline{A}}(n)$ peuvent s'écrire :

$$(6)\begin{cases} a_{ij}(n) = d(n-i).d^*(n-j) \qquad \text{pour } i \neq j \\ a_{ii}(n) = |d(n-i)|^2 \end{cases}$$

Selon une première mesure, les coefficients du filtre transversal, au lieu d'être modifiés à chaque instant d'échantillonnage nT, sont modifiés tous les "L" instants d'échantillonnage, avec un terme de modification qui est la moyenne des L modifications calculées suivant les formules classiques (3) ou (4). Il en résulte que l'algorithme de modification des coefficients peut s'écrire suivant une formule déduite de la formule (3) :

$$\vec{C}[(p+1)L] = \vec{C}[pL] + \frac{\alpha}{L} \sum_{n=pL}^{(p+1)L-1} e(n) . \vec{D}^*(n) \qquad (7)$$

Cet algorithme de modification des coefficients peut aussi s'écrire suivant une formule déduite de la formule (4) :

$$\vec{C}[(p+1)L] = \vec{C}[pL] + \frac{\alpha}{L} \bar{\bar{B}}(pL) . [\vec{k} - \vec{C}(pL)] \qquad (8)$$

$\bar{\bar{B}}(pL)$ étant une matrice d'ordre N, qui se déduit de la matrice $\bar{\bar{A}}(n)$ définie par la formule (5) :

$$\bar{\bar{B}}(pL) = \sum_{n=pL}^{(p+1)L-1} \bar{\bar{A}}(n) \qquad (9)$$

On déduit alors aisément des formules (6) donnant les composantes de la matrice $\bar{\bar{A}}(n)$ que les composantes de la matrice $\bar{\bar{B}}(pL)$ sont :

$$(10) \begin{cases} b_{ij} = \sum_{n=pL}^{(p+1)L-1} d(n-i) . d^*(n-j) & \text{pour } i \neq j \\ & i,j = 0,1 \ldots, N-1 \\ b_{ii} = \sum_{n=pL}^{(p+1)L-1} |d(n-i)|^2 \end{cases}$$

Une autre mesure prise consiste à utiliser, pour engendrer le signal d'écho et l'annuler, un signal de données D(n) périodique avec une période LT telle que L $\geq$ N, NT étant le retard total produit par le filtre transversal. Ceci signifie que les composantes $b_{ij}$ et $b_{ii}$ de la matrice $\bar{\bar{B}}(pL)$ se reproduisent périodiquement avec une période définie par L et sont indépendantes de la variable p, si p $\geq$ 1. On peut donc écrire ces composantes :

$$(11) \begin{cases} b_{ij} = \sum_{n=0}^{L-1} d\{n-i\} . d^*(n-j) & \text{pour } i \neq j \\ & i,j = 0,1, \ldots N-1 \\ \text{Avec } \{n-i\} = (n-i) \text{ modulo } L \\ \qquad \{n-j\} = (n-j) \text{ modulo } L \\ b_{ii} = \sum_{n=0}^{L-1} |d\{n-i\}|^2 \end{cases}$$

On peut montrer que, du fait de la périodicité du signal de données D(n), les composantes $b_{ii}$ sont indépendantes de l'indice i et, d'après la deuxième formule (10), ont la valeur $b_0$ telle que :

$$b_0 = \sum_{n=0}^{L-1} |d(n)|^2 \qquad (12)$$

Cette valeur $b_0$ des composantes $b_{ii}$ peut se mettre sous la forme :

6

$$b_0 = L\sigma^2$$

où $\sigma^2$ est la puissance de chaque donnée du signal D(n).

On peut montrer d'autre part que les composantes $b_{ij}$ ne dépendent que de la différence d'indices i-j et que $b_{ij} = b^*_{ji}$. Les composantes $b_{ij}$ ayant une différence i-j positive ont des valeurs $b_i$ telles que :

$$b_i = \sum_{n=0}^{L-1} d(n).d^*|\{n-i\}| \qquad (13)$$

Les composantes $b_{ji}$ ayant une différence j-i positive ont des valeurs $b_j$ telles que $b_j = b^*_i$.

Finalement, en tenant compte de ces propriétés des composantes de la matrice $\bar{\bar{B}}(pL)$, procurées par la périodicité du signal de données D(n), cette matrice peut s'écrire :

$$\bar{\bar{B}}(pL) = \begin{bmatrix} b_0 & b_1 & b_2 & & & b_{N-1} \\ b^*_1 & b_0 & b_1 & & & \\ b^*_2 & b^*_1 & b_0 & & & b_2 \\ & & & & & b_1 \\ b^*_{N-1} & & & b^*_2 & b^*_1 & b_0 \end{bmatrix}$$

Une autre mesure prise consiste à utiliser un signal de données D(n) tel que les valeurs $b_i$ des composantes $b_{ij}$ de la matrice $\bar{\bar{B}}(pL)$, telles qu'elles sont données par la formule (13), soient nulles pour i # 0 et i = 1, 2, ...,N-1. Cette propriété du signal D(n) s'écrit donc :

$$\sum_{n=0}^{L-1} d(n-).^*[\{n-i\}] = 0 \qquad (14)$$

$$\text{pour } i \neq 0$$

$$i = 1, 2, ..., N-1.$$

Cette propriété (14) signifie que la fonction d'autocorrélation du signal de données D(n) considérée entre les données et les données conjuguées, est nulle lorsque leur décalage mesuré modulo LT est de T, 2T,... (N-1)T. Lorsque ce décalage est nul, ou multiple de LT, la fonction d'autocorrélation prend une valeur maximale correspondant à la valeur $b_0 = L\sigma^2$, pour chaque élément de la diagonale de la matrice $\bar{\bar{B}}(pL)$.

Bien entendu, si on choisit le signal de données D(n) de sorte que sa fonction d'autocorrélation soit nulle pour tous décalages autres que zéro et les multiples de LT, on respecte forcément la propriété (14) strictement exigée, puisque l'on a choisi L > N.

Avec un signal de données périodique et répondant à la condition (14), toutes les composantes de la matrice $\bar{\bar{B}}(pL)$ sont nulles, sauf celles de la diagonale qui ont la valeur $b_0 = L\sigma^2$ ; cette matrice $\bar{\bar{B}}(pL)$ est donc égale à $L\sigma^2.II_B$ où $II_N$ est la matrice d'identité.

La formule (8) donnant l'algorithme de modification des coefficients peut alors s'écrire :

$$\vec{C}[(p+1)L] = \vec{C}(pL) + \alpha\sigma^2[\vec{k}-\vec{C}(pL)]$$

soit :

$$\vec{C}[(p+1)L] = \vec{C}(pL)[1-\alpha\sigma^2] + \alpha\sigma^2 \vec{k} \qquad (15)$$

Si le coefficient de pondération a est choisi de telle manière que :

$$\alpha = \frac{1}{\sigma^2}$$

la formule (15) devient :

$$\vec{C}[(p+1)L] = \vec{k} \qquad\qquad (16)$$

Ainsi, quelle que soit la valeur des coefficients $\vec{C}(pL)$ du filtre transversal à un instant pLT, on peut obtenir la valeur optimale de ces coefficients $\vec{C}[(p+1)L]$ à un instant $(p+1)LT$, égale aux échantillons $\vec{k}$ de la réponse impulsionnelle du trajet d'écho et permettant l'annulation du signal d'écho, en effectuant le calcul donné par la formule (7) dans les conditions précisées ci-dessus. Le modem distant n'émettant aucun signal de données, les opérations à effectuer dans le modem local sont en résumé les suivantes :
- Emission d'un signal de données d'apprentissage D(n), périodique, répondant à la propriété (14). Comme la période LT de ce signal de données est telle que L ≥ N, le filtre transversal procurant un retard NT ne peut emmagasiner au plus qu'une période du signal de données.
- Calcul des coefficients du fitlre transversal suivant la formule (7) en choissant un coefficient de pondération $\alpha$ tel que $\alpha = 1/\sigma^2$, $\sigma^2$ correspondant à la puissance constante de chaque donnée du signal D(n). Comme le montre la formule (7), les coefficients $\vec{C}[(p+1)L]$ sont obtenus par une seule modification des coefficients $\vec{C}[pL]$, cette modification résultant du calcul pendant une période LT, de la somme des produits $e_n \cdot \vec{D}^*(n)$ calculés à chaque instant nT de la période.

Comme on l'a montré ci-dessus, les coefficients obtenus $\vec{C}[(p+1)L]$ ont, après cette unique modification, les valeurs optimales $\vec{k}$ permettant l'annulation du signal d'écho.

Puisque ce procédé est appliqué en fait à l'apprentissage de l'annuleur d'écho, il est plus commode d'écrire la formule (7), pour la période de durée LT du signal d'apprentissage, telle que p = 0. Avec $\alpha = 1/\sigma^2$, la formule (7) devient alors :

$$\vec{C}(L) = \vec{C}(0) + \frac{1}{L\sigma^2} \sum_{n=0}^{L-1} e(n) \cdot \vec{D}^*(n) \qquad\qquad (17)$$

Pour éviter du bruit sur les coefficients, dû à la précision non infinie des calculs, il est préférable que les coefficients $\vec{C}(0)$ au début de la période de calcul soient annulés, de sorte que dans ce cas utilisé pratiquement, les coefficients $\vec{C}(L)$ obtenus à la fin de cette période sont formés suivant l'expression :

$$\vec{C}(L) = \frac{1}{L\sigma^2} \sum_{n=0}^{L-1} e(n) \cdot \vec{D}^*(n) \qquad\qquad (18)$$

Dans le cas maintenant envisagé où les coefficients $\vec{C}(0)$ sont annulés, le signal de sortie du filtre transversal $\hat{\epsilon}(n)$ reste nul pendant toute la période de calcul, de sorte que pendant cette période on a e(n) = $\epsilon(n)$. Les coefficients du filtre peuvent donc aussi être calculés suivant l'expression :

$$\vec{C}(L) = \frac{1}{L\sigma^2} \sum_{n=0}^{L-1} \epsilon(n) \cdot \vec{D}^*(n) \qquad\qquad (19)$$

Avec le procédé que l'on vient de décrire, le calcul des coefficients du filtre transversal est effectué pendant une seule période de durée LT, du signal de données utilisé pour l'apprentissage de l'annuleur d'écho Bien entendu pour que ce calcul procure les coefficients optimaux il est nécessaire que le signal d'écho engendré par le signal d'apprentissage D(n) soit présent à l'entrée du circuit de différence de l'annuleur d'écho, au moment du calcul. Pour obtenir les coefficients optimaux, on doit donc émettre le signal d'apprentissage d'abord pendant le temps nécessaire à l'excitation du chemin d'écho, qui est en fait égal au retard NT procuré par le filtre transversal si ce dernier est dimensionné au plus juste, puis pendant le temps de calcul LT des coefficients. Avec ce procédé le temps de convergence de l'annuleur d'écho, à partir du moment où l'on commence à émettre la séquence d'apprentissage, peut donc être réduit à $(L+N)T$, et à la valeur minimale $2NT$, dans le cas où $L = N$. Dans ce dernier cas, pour annuler par exemple un écho de 20 mS, le temps nécessaire est de 40 mS, à comparer à des temps de convergence de l'ordre de la seconde obtenus avec les annuleurs d'écho connus.

On peut remarquer que dans le cas général où le signal de données $D(n)$ est complexe, la relation (14) définissant la propriété de ce signal à respecter, se traduit par deux relations à respecter simultanément et concernant respectivement la partie réelle et la partie imaginaire du premier membre de la relation (14). En ce qui concerne le choix du signal d'apprentissage respectant ces relations, on utilise de préférence les valeurs de données qui sont normalement transmises par le modem et qui ont des valeurs telles que 0, $\pm$ 1, $\pm$ j, $\pm \sqrt{2}$, $\pm$ j$\sqrt{2}$,... etc. Un signal d'apprentissage répondant à la relation (14) et comprenant 16 éléments dans une période est formé par exemple à l'aide de la séquence : 1,1,1,1,1,j, - 1, - j, 1, - 1, 1, - 1, 1, - j, - 1, j.

Avec un signal de données d'apprentissage $D(n)$ répondant à la propriété définie par la relation (14), on obtient l'annulation du signal d'écho comme on l'a expliqué, sans aucune restriction concernant le spectre de ce signal. En particulier un tel signal d'apprentissage convient pour annuler un signal d'écho comportant ou non une composante continue. Le cas d'un écho comportant une composante continue se produit par exemple dans le cas d'un annuleur d'écho utilisé dans un modem de transmission en bande de base ou dans le cas où l'annulation de l'écho est effectuée après la démodulation d'un signal transmis par modulation d'une porteuse. Le cas d'un écho sans composante continue se produit par exemple dans le système envisagé sur la figure 1, dans lequel l'écho est engendré par un signal de porteuse modulée et son annulation est effectuée directement sur le signal reçu avant sa démodulation.

Dans un cas tel que celui envisagé sur la figure 1, où le signal d'écho ne comporte pas de composante continue, on peut utiliser un signal d'apprentissage périodique $D(n)$ qui, au lieu de répondre à la condition (14), répond à la condition :

$$\sum_{n=0}^{L-1} d(n).d^*[\{n-i\}] = -1 \qquad (20)$$

$$\text{pour } i \neq 0$$
$$i = 1, 2, \ldots N-1.$$

Cette condition (20) peut être remplie en particulier au moyen des séquences de données connues sous le nom de séquences de longueur maximale dont la fonction d'autocorrélation prend, à un facteur constant près, la valeur - 1 pour tous décalages autres que zéro et les multiples de la période $LT$ de la séquence et la valeur $L$ pour un décalage nul ou multiple de $LT$.

Si l'on utilise un signal d'apprentissage $D(n)$ répondant à cette condition (20), la matrice $\overline{\overline{B}}(pL)$ a ses composantes $b_0$ situées sur la diagonale, encore égales à $L\sigma^2$, tandis que toutes ses autres composantes sont égales à - 1. On peut démontrer que dans ce cas, si l'on applique la formule (8) de calcul des coefficients avec $\alpha = 1/\sigma^2$ et $\vec{C}(pL) = 0$ (coefficients initialisés à zéro), on obtient :

$$\vec{C}[(p+1)L] \simeq \vec{k} - \frac{1}{L\sigma^2} \vec{d}$$

Dans cette expression $\vec{d}$ est un vecteur dont les $N$ composantes sont égales à $k_0 + k_1 + \ldots + k_{N-1}$, c'est-à-dire à la somme des composantes du vecteur $\vec{k}$. Ce vecteur $\vec{d}$ représente ainsi la composante continue de la réponse impulsionnelle du chemin d'écho. Or le signal d'écho ne peut être annulé que si pratiquement

$$\vec{C}[(p+1)L] = \vec{k}.$$

Il en résulte que, pour qu'un signal d'apprentissage répondant à la propriété (20) puisse permettre l'annulation de l'écho, il est nécessaire que cet écho ne comporte pas de composante continue.

Par la suite, on supposera généralement que le signal d'apprentissage répond à la propriété (14) qui convient à tous les cas, étant entendu qu'il peut répondre aussi à la propriété (20) si le signal d'écho n'a pas de composante continue.

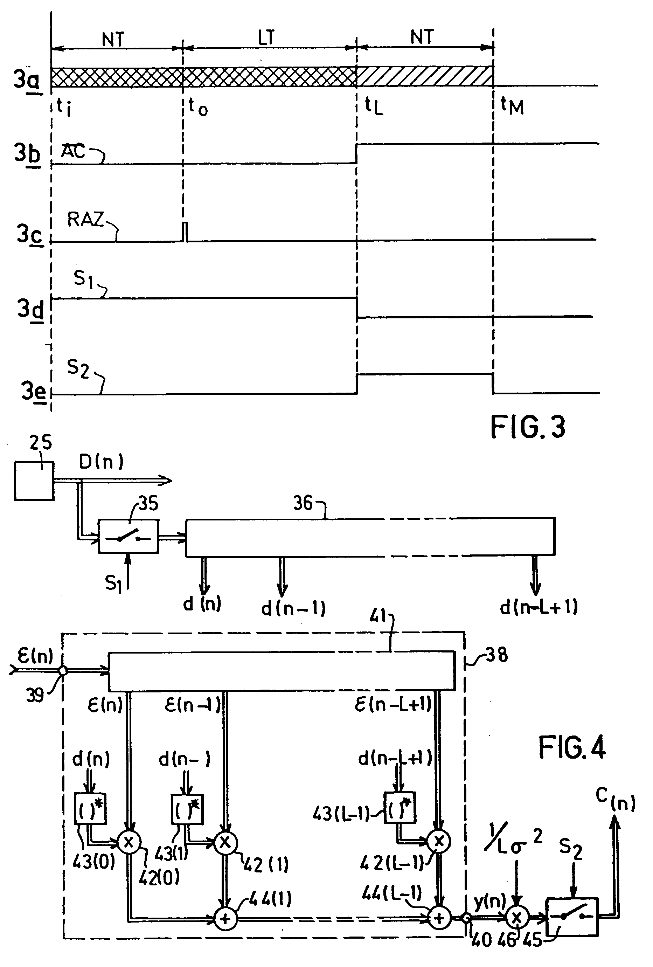

La figure 2 montre une configuration possible pour le dispositif de calcul des coefficients du filtre transversal 15, pendant la période d'apprentissage d'un annuleur d'écho utilisant le procédé de l'invention, tandis que sur la figure 3 les diagrammes de signaux 3a à 3c sont destinés à en expliquer le fonctionnement.

Sur la figure 2, on a représenté un générateur 25 qui fournit un signal d'apprentissage complexe D(n) de période LT, ayant les propriétés d'autocorrélation expliquées ci-dessus. Pendant la période d'apprentissage ce générateur 25 est connecté d'une part à la voie émission 1 du modem, par l'intermédiaire de l'ensemble des circuits 11, 12, 13 fournissant le signal de porteuse modulée et d'autre part à l'entrée d'une mémoire 26 agencée pour fournir en parallèle sur N sorties, les N derniers échantillons du signal appliqué à son entrée pendant une durée NT. Cette mémoire 26 est par exemple celle qui est utilisée normalement dans le filtre transversal 15 de l'annuleur d'écho. Sur le diagramme 3a de la figure 3, on a représenté par une zone doublement hachurée le temps pendant lequel, dans la configuration de la figure 2, le signal d'apprentissage D(n) est fourni à la voie émission 1 du modem et à la mémoire 26, à partir d'un instant initial $t_i$. On se place dans le cas général où la période LT du signal d'apprentissage est supérieur au temps de stockage NT de la mémoire 26, ce temps NT étant au moins égal au temps d'excitation du chemin d'écho. A partir du temps $t_0 = t_i + NT$, on est certain que le signal d'écho $\epsilon(n)$ est présent dans la voie réception 3 du modem. Le dispositif de calcul de la figure 2 permet de calculer les N coefficients du filtre transversal 15, pendant la période LT du signal d'apprentissage s étendant de l'instant $t_0$ à l'instant $t_L = t_0 + LT$. Ce dispositif de calcul des coefficients comporte N circuits identiques qui sont connectés sur les N sorties de la mémoire 26 pour recevoir respectivement à un instant donné nT les échantillons d(n), d(n-1),... d(n-M+1) du signal d'apprentissage et qui fournissent respectivement à l'issue de la période de calcul les N coefficients C(0), C(1),... C(N-1).

Le circuit de calcul du coefficient C(0) par exemple, comporte un circuit 28 formant la valeur conjuguée d*(n) de l'échantillon d(n) du signal d'apprentissage. Cette valeur conjuguée est multipliée dans le circuit multiplicateur 29 par le signal d'écho $\epsilon(n)$ en supposant que l'on applique la formule (19). Chaque produit ainsi formé $\epsilon(n).d*(n)$ est appliqué au circuit multiplicateur 30 pour y être multiplié par le facteur constant $1/L\sigma^2$. Le signal de sortie du circuit multiplicateur 30 est appliqué à la porte 31 qui peut être bloquée par un signal AC d'arrêt de calcul, comme on l'expliquera par la suite. La sortie de la porte 31 est connectée à un accumulateur formé par la mémoire 33 et le circuit additionneur 32. Le contenu de la mémoire 33 peut être remis à zéro par un signal RAZ et fournit le coefficient C(0) du filtre transversal à l'issue de la période de calcul. Les autres circuits de calcul des coefficients utilisent de la même manière le signal d'écho $\epsilon(n)$, le facteur constant $1/L\sigma^2$ et les signaux de commande AC et RAZ.

Le fonctionnement d'un circuit de calcul des coefficients, tel que le circuit fournissant le coefficient C(0) est le suivant : les signaux de commande AC et RAZ ont la forme montrée sur les diagrammes 3b et 3c de la figure 3. Le signal d'arrêt de calcul AC est bas jusqu'à l'instant $t_L$ et permet jusqu'à cet instant au signal de sortie du circuit multiplicateur 30 d'être appliqué via la porte 31, à l'accumulateur 33, 32. Mais le calcul effectif des coefficients ne commence qu'à l'instant $t_0$ où se produit dans le signal RAZ, une impulsion qui remet à zéro la mémoire 33 de l'accumulateur. A partir de cet instant $t_0$, l'accumulateur forme la somme des termes

$$\frac{1}{L\sigma^2}.\epsilon(n).d*(n)$$

fournis par le circuit multiplicateur 30 et à l'instant $t_L = t_0 + LT$, cette somme formée dans l'accumulateur constitue le coefficient C(0). A l'instant $t_L$, le signal AC d'arrêt de calcul devient haut et bloque la porte 31 de sorte qu'après l'instant $t_L$ le coefficient C(0) calculé reste disponible à la sortie de la mémoire de l'accumulateur pour être utilisé dans le filtre transversal 15. Les autres coefficients du filtre transversal C(1) à C(N-1) sont calculés de la même manière pendant la période de temps allant de $t_0$ à $t_L$ et sont disponibles simultanément après l'instant $t_L$ pour être utilisés dans le filtre transversal.

Après la période d'apprentissage qui a ainsi permis d'initialiser les coefficients du filtre transversal de l'annuleur d'écho, le générateur 25 de la séquence d'apprentissage est déconnecté et le modem est établi dans la configuration de la figure 1 pour transmettre les données utiles. Pendant la transmission des données, les coefficients du fitlre transversal 15 de l'annuleur d'écho peuvent être asservis par des procédés connus consistant généralement à modifier les coefficients par récurrences successives suivant la formule de récurrence (3) indiquée ci-dessus. Il est aisé de voir que les circuits décrits à la figure 2, qui permettent le calcul des coefficients pendant la période d'apprentissage, permettent également l'asservissement des coefficients pendant la transmission des données, si le signal AC reste en permanence à l'état bas pour que la porte 31 reste passante et si le contenu de l'accumulateur n'est pas remis à zéro par le signal RAZ, le facteur constant a pouvant être ajusté à une valeur différente de la valeur $1/L\sigma^2$ utilisée pendant la période d'apprentissage.

La figure 4 montre une autre configuration possible pour le dispositif de calcul des coefficients du filtre transversal 15, pendant la période d'apprentissage. Au lieu de fournir ces coefficients simultanément, le dispositif de la figure 4 fournit les coefficients successivement.

La figure 4 montre le générateur 25 du signal d'apprentissage D(n) qui, pendant la période d'apprentissage est connecté, d'une part, à la voie émission 1 du modem, comme sur la figure 2 et d'autre part, via un circuit interrupteur 35, à l'entrée d'une mémoire $\overline{36}$ agencée pour fournir en parallèle sur L sortie, les L derniers échantillons du signal appliqué à son entrée. Dans le cas où L = N la mémoire 36 peut être entièrement constituée par celle agencée pour N échantillons, dont est normalement muni le filtre transversal 15. Le circuit interrupteur 35 étant d'abord supposé fermé, il est ouvert par un signal de commande $S_1$, à un instant que l'on précisera par la suite, de telle manière que sur les L sorties de la mémoire 36 restent disponibles les échantillons d(n), d(n-1),..., d(n-L+1) du signal d'apprentissage.

Le dispositif de calcul des coefficients proprement dit a la forme d'un filtre transversal 38 dont l'entrée 39 reçoit le signal d'écho $\epsilon(n)$ et dont la sortie 40 fournit le signal y(n) qui, pendant un intervalle de temps NT bien déterminé, s'identifie aux N coefficients en série du filtre transversal 15 de l'annuleur d'écho. Les échantillons du signal d'écho $\epsilon(n)$ sont appliqués à une entrée de la mémoire 41 agencée pour fournir en parallèle sur L sorties, les L derniers échantillons du signal appliqué à son entrée. A l'instant où le circuit interrupteur 35 est ouvert, les échantillons apparaissant sur les L sorties de la mémoire 41 sont $\epsilon(n)$, $\epsilon(n-1)$, ..., $\epsilon(n-L+1)$. Ces échantillons sont appliqués respectivement à une entrée des circuits multiplicateurs 42(0), 42(1), ..., 42(L-1) dont l'autre entrée reçoit les valeurs conjuguées $d^*(n)$, $d^*(n-1)$, ..., $d^*(n+L-1)$ des échantillons de signal d'apprentissage disponibles sur les L sorties de la mémoire 36. Ces valeurs conjuguées constituent les coefficients du filtre transversal 38 ; elles sont formées respectivement par les circuits 43(0), 43(1), ..., 43(L-1). Les échantillons de sortie des circuits multiplicateurs 42(0), 42(1), ..., 42(L-1) sont additionnés à l'aide de la chaîne de circuits d'addition 44(1), ..., 44(L-1). A la sortie de cette chaîne, on obtient le signal de sortie y(n) du filtre transversal 38. Ce signal y(n) est appliqué au circuit multiplicateur 46 pour y être multiplié par le facteur constant $1/L\sigma^2$, puis le produit

$$\frac{1}{L\sigma^2} \cdot y(n)$$

est appliqué au circuit interrupteur 45 qui, sous la commande d'un signal $S_2$, ouvre une fenêtre temporelle de durée NT, pendant laquelle on obtient N échantillons successifs constituant les N coefficients $\overline{\overline{C}}(n)$ du filtre transversal 15 de l'annuleur d'écho.

Les conditions temporelles permettant d'obtenir ce résultat peuvent être précisées à l'aide des diagrammes 3d et 3e de la figure 3, qui représentent respectivement les signaux de commande $S_1$ et $S_2$ commandant $\overline{\text{la}}$ fermeture des circuits interrupteurs 35 et 45. De l'instant initial $t_i$ à l'instant $t_L$, le circuit interrupteur 35 est fermé par le signal de commande $S_1$ et le circuit interrupteur 45 est ouvert par le signal de commande $S_2$. A l'instant $t_0$, le signal d'écho commence à apparaître à l'entrée 39 de la mémoire 41 et pendant la période LT du signal d'apprentissage s'écoulant de $t_0$ à $t_L$, la mémoire 41 emmagasine des échantillons du signal d'écho, tandis que la mémoire 36 emmagasine des échantillons du signal d'apprentissage. A l'instant $t_L$, le circuit interrupteur 35 s'ouvre sous la commande du signal $S_1$ et L échantillons d(n) à d(n-L+1) restent emmagasinés dans la mémoire 36. A l'instant $t_L$, le circuit interrupteur 45 se ferme sous la commande du signal $S_2$. Juste après l'instant $t_L$, le filtre 38 calcule un premier échantillon y(n) tel que :

$$y(n) = \sum_{m=0}^{L-1} \epsilon(n-m) \cdot d^*(n-m)$$

Ce premier échantillon y(n) multiplié par le facteur $1/L\sigma^2$ constitue le premier coefficient C(0) du filtre transversal 15 de l'annuleur d'écho, qui est transmis par le circuit interrupteur 45. Ce dernier reste ouvert pendant une durée NT suivant l'instant $t_L$, jusqu'à l'instant $t_M$. Pendant toute cette durée représentée par une zone simplement hachurée sur le diagramme 3a le filtre transversal 38 utilise les mêmes coefficients $d^*(n)$ à $d^*(n-L+1)$ et après chaque instant $t_L + iT(0 \leq i \leq N-1)$, ce filtre 38 calcule un échantillon y(n+i) tel que :

$$y(n+i) = \sum_{m=0}^{L-1} \varepsilon(n+i-m).d^*(n-m)$$

Les N échantillons y(n) à y(n + N-1) fournis par le filtre 38 et multipliés par le facteur constant $1/L\sigma^2$ sont transmis par le circuit interrupteur 45 jusqu'à l'instant $t_M$ pour former les N coefficients C(0) à C(N-1) du filtre transversal 15 de l'annuleur d'écho. On peut remarquer qu'avec la configuration de la figure 4, le temps $t_M$ requis pour obtenir ces N coefficients en série est supérieur de NT au temps $t_L$ requis avec la configuration de la figure 2 pour obtenir les N coefficients en parallèle.

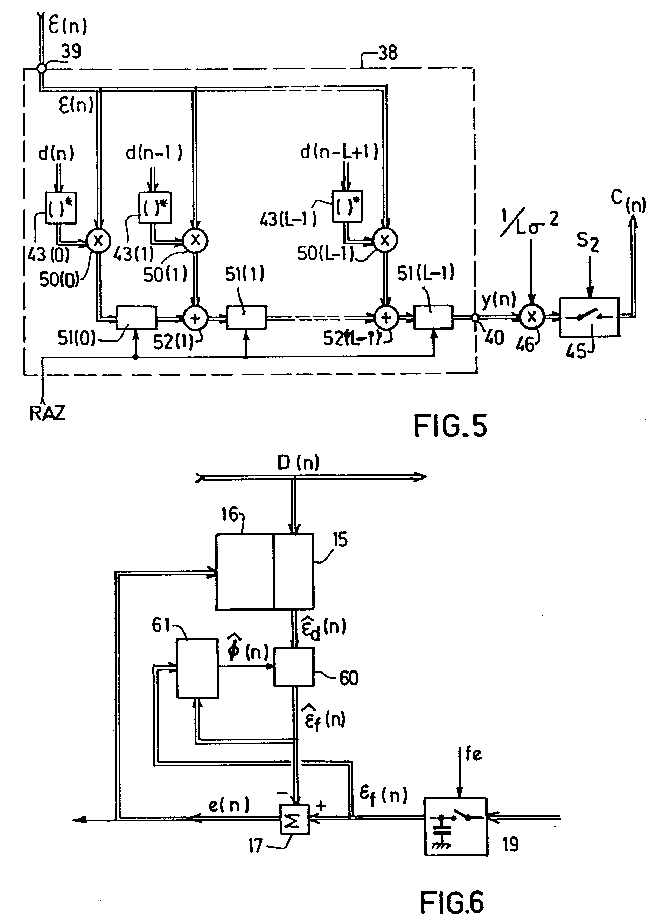

Dans la configuration du dispositif de calcul des coefficients de la figure 4, le filtre transversal 38 peut être réalisé de façon différente, par exemple selon le schéma connu en soi montré sur la figure 5. Sur la figure 5, les éléments ayant la même fonction que sur la figure 4 sont référencés de la même manière. On voit sur la figure 5 que chaque échantillon $\varepsilon$(n) du signal d'écho est directement appliqué à L circuits multiplicateurs 50(0) à 50(L-1) qui reçoivent d'autre part, en provenance des circuits 43(0) à 43(L-1), les valeurs conjuguées des échantillons d(n) à d(n-L + 1) du signal d'apprentissage. Ces échantillons sont formés comme l'indique la figure 4 aux sorties de la mémoire 36. Le filtre 38 comporte également L registres-mémoires 51(0) à 51(L-1) qui procurent chacun un retard T sur leurs échantillons d'entrée. Les échantillons de sortie des registres 51(0) à 51(L-2) sont appliqués à une entrée des L-1 circuits additionneurs 52(1) à 52(L-1). La sortie du circuit multiplicateur 50(0) est reliée à l'entrée du registre 51(0). La sortie des circuits multiplicateurs 50(1) à 50(L-1) est reliée à une entrée des circuits additionneurs 52(1) à 52(L-1). La sortie du circuit additionneur 52(L-1) est reliée à la sortie 40 du filtre transversal 38 par l'intermédiaire du registre 51(L-1). Le signal de sortie y(n) de ce filtre transversal est traité de la même manière que sur la figure 4, c'est-à-dire multiplié par le facteur constant $1/L\sigma^2$ à l'aide du circuit 46, puis appliqué au circuit interrupteur 45 dont la fermeture est commandée par le signal $S_2$.

Avec un filtre 38 constitué de cette manière, les registres-mémoires 51(0) à 51(L-2) doivent être remis à zéro par une impulsion du signal RAZ montré sur le diagramme 3c et se produisant à l'instant $t_0$. Pendant l'intervalle de temps LT s'écoulant de l'instant $t_0$ à l'instant $t_L$, des résultats partiels apparaissent à la sortie 40 du filtre transversal 38 et ne sont pas utilisés puisque le circuit interrupteur 45 est alors ouvert. Pendant l'intervalle de temps NT s'écoulant de l'instant $t_L$ à l'instant $t_M$, des résultats de calcul complets apparaissent à la sortie 40 du filtre 38 et permettent d'obtenir à la sortie du circuit interrupteur 45 alors fermé, les N coefficients C(0) à C(N-1) du filtre transversal 14 de l'annuleur d'écho.

Jusqu'à présent, on a supposé que le procédé de l'invention et le dispositif de calcul correspondant étaient utilisés dans un modem local, en l'absence de tout signal provenant du modem distant, c'est-à-dire dans les conditions prévues actuellement par le CCITT pour la période d'apprentissage de l'annuleur d'écho. Mais le procédé de l'invention, utilisant des dispositifs semblables, permet également de réduire le temps de convergence d'un annuleur d'écho, lorsqu'un signal de données est reçu en provenance du modem distant.

On se place d'abord dans le cas où le modem distant émet un signal de données quelconque, alors que dans le modem local l'on cherche à retrouver une annulation d'écho perdue. Cette situation peut se produire par exemple si le dispositif d'asservissement des coefficients de l'annuleur d'écho n'a pas fonctionné correctement pendant une transmission en duplex simultané, alors que l'on est dans l'impossibilité de commander l'arrêt de l'émission des données par le modem distant. Dans ce cas, le signal $\varepsilon$(n) appliqué au circuit de différence 17 de l'annuleur d'écho, n'a plus seulement la valeur du signal d'écho $\vec{D}$(n). $\vec{k}$ comme l'indique la formule (2), mais la valeur :

$$\varepsilon(n) = \vec{D}(n).\vec{k} + b(n) \tag{21}$$

Dans cette expression de $\varepsilon$(n), b(n) est un terme additif de bruit procuré par le signal de données provenant du modem distant.

Si l'on utilise le procédé de l'invention en calculant, conformément à la formule (19), les coefficients $\vec{C}$(L) du filtre transversal 15 de l'annuleur d'écho, au lieu d'obtenir les coefficients

$$\vec{C}(L) = \vec{k}$$

permettant d'annuler exactement le signal d'écho, on obtient, avec un signal $\epsilon(n)$ selon la formule (21), les coefficients :

$$\vec{C}(L) = \vec{k} + \frac{1}{L\sigma^2} \sum_{n=0}^{L-1} b(n).\vec{D}^*(n) \tag{22}$$

Le bruit $b(n)$ dans le signal $\epsilon(n)$ se traduit par un bruit $\Delta\vec{C}$ au niveau des coefficients du filtre transversal 15 de l'annuleur d'écho, ce bruit $\Delta\vec{C}$ étant égal au deuxième terme de l'expression des coefficients de la formule (22). Si l'on appelle $\sigma^2{}_b$ l'erreur quadratique du bruit $b(n)$, l'erreur quadratique moyenne du bruit $\Delta\vec{C}$ au niveau des coefficients peut s'écrire :

$$E[|\Delta\vec{C}|^2] = \frac{1}{L^2\sigma^2}.L.\sigma^2{}_b.N\sigma^2 = \frac{N}{L}\frac{\sigma^2{}_b}{\sigma^2}$$

Le bruit $\Delta\vec{C}$ des coefficients détermine alors à la sortie du circuit de différence 17, un signal d'écho résiduel $\hat{e}(n)$ qui a pour erreur quadratique :

$$E[|\hat{e}(n)|^2] = E[|\Delta\vec{C}|^2].\sigma^2 = \frac{N}{L}\sigma^2{}_b$$

On en déduit que le rapport R de la puissance de l'écho résiduel $\hat{e}(n)$ à la puissance du bruit $b(n)$ engendré par le modem distant vaut :

$$R = \frac{E[|\hat{e}(n)|^2]}{\sigma^2{}_b} = \frac{N}{L} \tag{23}$$

Cette formule (23) permet de fixer la durée LT du signal d'apprentissage à prendre en considération pour calculer les coefficients du filtre transversal 15, afin d'obtenir un rapport R déterminé. Pour obtenir par exemple un écho résiduel $\hat{e}(n)$ dont la puissance soit à 20 dB au-dessus de la puissance du bruit $b(n)$, on doit choisir R = N/L = 1/100, soit L = 100 N. La durée LT peut être la période effective du signal d'apprentissage qui peut être très grande, par exemple dans le cas où L = 100 N. Pour éviter d'avoir à former un signal d'apprentissage de période très grande, on peut aussi utiliser un signal d'apprentissage de période plus courte, par exemple de durée L'T = NT et prendre en considération pour le calcul des coefficients un intervalle de temps de durée LT multiple de L'T et correspondant au rapport R choisi.

Dans le procédé de l'invention tel qu'on vient de le décrire pour le cas où le modem distant émet un signal de données quelconque, les coefficients du filtre transversal de l'annuleur d'écho sont calculés par intégration de termes de correction des coefficients pendant une durée LT suffisamment longue pour que l'écho résiduel atteigne une faible valeur souhaitée. Dans une variante de l'invention appliquée au même cas, on utilise un signal d'apprentissage dont la période LT est égale à NT et qui possède les propriétés d'autocorrélation définies ci-dessus ; mais les coefficients du filtre transversal de l'annuleur d'écho sont modifiés en plusieurs étapes successives pendant chacune desquelles les corrections calculées sont intégrées pendant une durée LT = NT, avant d'être appliquées effectivement aux coefficients. Les modifications des coefficients après chaque étape p, sont effectuées selon la formule de récurrence (7) avec $\sigma = 1/\sigma^2$, les coefficients étant initialisés à la valeur 0, au début de la première étape p = 0, ce qui revient à utiliser la formule (18) pour le calcul des coefficients dans cette première étape. Les différentes variantes de l'invention appliquées au cas où le modem distant émet un signal de données quelconque procurent des temps de convergence de l'annuleur d'écho du même ordre de grandeur.

On a considéré jusqu'à présent que la fréquence d'échantillonnage $f_e$ dans la voie réception du modem était égale à la fréquence de modulation 1/T, c'est-à-dire la fréquence d'échantillonnage des données dans le signal d'apprentissage tel que D(n). Or, normalement la fréquence d'échantillonnage $f_e$ est un multiple de la fréquence 1/T. Un annuleur d'écho utilisant le procédé de la présente invention avec une fréquence d'échantillonnage $f_e$ telle que $f_e$ = q.1/T et recevant le signal de données D(n) échantillonné à la fréquence 1/T, doit être agencé pour calculer q jeux de coefficients du filtre transversal. Un premier agencement

EP 0 270 706 B1

consiste à faire travailler l'annuleur d'écho en répartition dans le temps pour calculer ces q jeux de coefficients au cours d'une seule période d'intégration LT. Un deuxième agencement nécessitant des circuits moins rapides consiste à calculer successivement les q jeux de coefficients ; le calcul de chaque jeu nécessite une période d'intégration LT, de sorte que le temps de convergence total de l'annuleur d'écho devient qLT.

On peut mettre en oeuvre le procédé de l'invention avec une séquence d'apprentissage D(n) ayant les propriétés particulières définies ci-dessus, en utilisant l'algorithme du signe, à condition toutefois de modifier les coefficients du filtre transversal en plusieurs étapes successives, pendant chacune desquelles les corrections calculées sont intégrées pendant une durée LT avant d'être appliquées effectivement aux coefficients. Les modifications des coefficients après chaque étape p sont alors effectuées selon la formule de récurrence ci-après, déduite de la formule (7) :

$$\vec{C}[(p+1)L] = \vec{C}[pL] + \frac{1}{Lo^2} \sum_{n=pL}^{(p+1)L-1} Signe[e(n).\vec{D}^*(n)]$$

Au début de la première étape telle que p = 0, les coefficients sont initialisés à la valeur 0. Il est clair qu'avec l'algorithme du signe, on n'obtient pas les coefficients avec une précision suffisante. Le processus est donc répété pendant un certain nombre d'étapes, jusqu'à obtenir les coefficients avec la précision souhaitée. L'utilisation de l'algorithme de signe dans le procédé de l'invention augmente donc le temps de convergence de l'annuleur d'écho, mais permet une simplification importante des circuits de calcul.

La présente invention s'applique au cas des échos non linéaires, se produisant en particulier dans certains systèmes de transmission par courants porteurs, qui engendrent un signal d'écho affecté d'une dérive de fréquence porteuse par rapport à la fréquence porteuse du signal émis. Un annuleur d'écho linéaire est mal adapté pour corriger un tel signal d'écho dont la phase est variable en fonction de la dérive de fréquence. On connaît des annuleurs d'écho conçus pour annuler des signaux d'écho avec dérive de fréquence, par exemple celui décrit dans la demande de brevet français No 80 06 748 déposée le 26 mars 1980 au nom de la Demanderesse = (EP-A-0036696). Ces annuleurs d'écho comportent généralement un dispositif qui, à partir du signal reçu, engendre une phase simulée du signal d'écho, cette phase simulée servant à corriger en phase, dans le sens convenable, le signal d'écho reçu ou le signal de copie d'écho engendré par le filtre transversal. La figure 6 montre à titre d'exemple la structure générale possible pour un annuleur d'écho avec dérive de fréquence. Les éléments ayant la même fonction que sur la figure 1 sont référencés de la même manière. La figure 6 montre le circuit de différence 17 recevant sur son entrée (+) le signal d'écho $\epsilon_f(n)$ affecté de dérive de fréquence et sur son entrée (-) le signal de copie d'écho $\hat{\epsilon}_f(n)$. Le signal d'écho $\epsilon_f(n)$ peut s'écrire en utilisant la notation vectorielle :

$$\epsilon_f(n) = \underset{\rightarrow}{D}(n).\vec{k}.exp.j\Phi(n) \qquad\qquad (24)$$

$\phi(n)$ étant la phase du signal d'écho.

Pour obtenir le signal de copie d'écho $\hat{\epsilon}_f(n)$, on utilise un filtre transversal 15 dont les coefficients sont déterminés dans le dispositif 16 et un circuit déphaseur 60 qui modifie de $+\hat{\phi}(n)$ la phase du signal de sortie $\hat{\epsilon}_d(n)$ du filtre 15, $\hat{\phi}(n)$ étant la phase simulée du signal d'écho fournie par le générateur de phase 61, cette modification de phase étant effectuée en formant le produit $\hat{\epsilon}_d.expj\phi(n)$. Les coefficients sont déterminés dans le dispositif 16 à partir du signal de différence e(n) ou du signal d'écho reçu $\epsilon_f(n)$. La phase simulée $\hat{\phi}(n)$ est déterminée dans le générateur 61, à partir du signal e(n) ou $\epsilon_f(n)$, et à partir du signal $\hat{\epsilon}_f(n)$ fournie par le circuit déphaseur 60, de façon à être égale à la phase $\phi(n)$ du signal d'écho.

Le procédé de l'invention peut être appliqué à un annuleur d'écho de ce genre, le signal de copie d'écho $\hat{\epsilon}_f(n)$ étant alors obtenu en deux étapes, l'une permettant d'obtenir les coefficients du filtre transversal 15, l'autre permettant d'obtenir la phase simulée du signal d'écho.

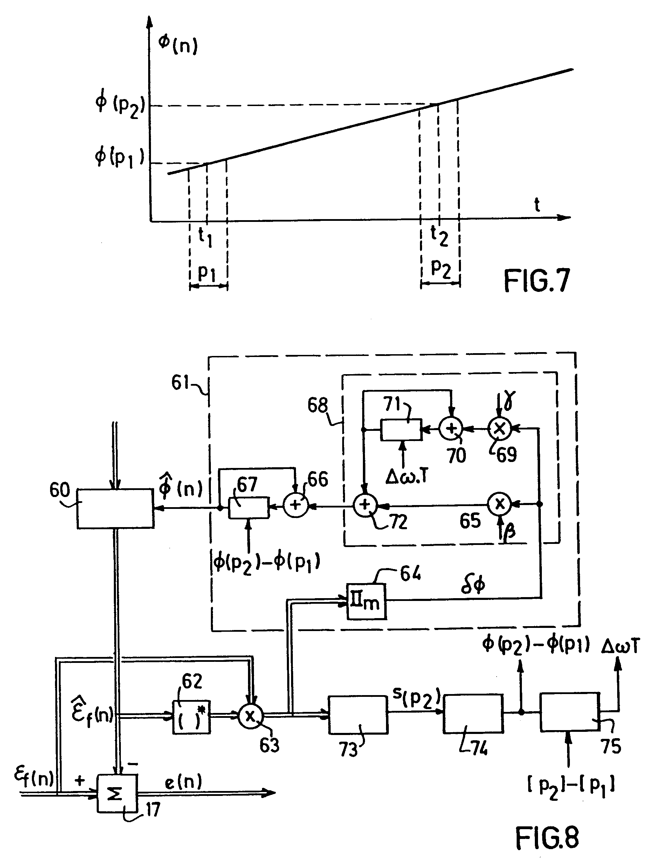

Pour décrire ce procédé en deux étapes on a représenté sur la figure 7 la variation en fonction du temps de la phase $\phi(n)$ d'un signal d'écho avec dérive de fréquence ; cette variation de phase peut être considérée comme linéaire. La première étape consiste à calculer dans le dispositif 16, les coefficients du filtre transversal 15, en effectuant selon le procédé déjà décrit une intégration des corrections, pendant la période LT du signal d'apprentissage D(n). Comme le montre la figure 7, cette première étape a lieu pendant l'intervalle de temps [p₁] centré autour de l'instant t₁. Les coefficients ayant été initialisés à zéro au

14

début de l'intervalle, le calcul des coefficients est effectué selon l'expression (19), que l'on peut écrire de façon plus succincte, pour l'intervalle $[p_1]$ :

$$\vec{C}(p_1) = (\sum_{[p_1]}^{n} \epsilon_f(n).\vec{D}^*(n)).\frac{1}{L\sigma^2}$$

Pour les faibles dérives de fréquence constatées en pratique (de l'ordre de 0,1 Hz), on peut légitimement supposer que pendant tout l'intervalle $[p_1]$ la phase $\phi(n)$ a la valeur constante $\phi[p_1]$ qui est la valeur moyenne de la phase dans l'intervalle $[p_1]$. Il en résulte que le calcul des coefficients par intégration pendant l'intervalle $[p_1]$ fournit des valeurs de coefficients :

$$\vec{C}(p_1) \# \vec{k}.\exp.j\phi(p_1) \qquad\qquad (25)$$

Ceci signifie qu'à la fin de la première étape, les coefficients $\vec{C}(p_1)$ du filtre transversal ont les valeurs permettant de compenser le signal d'écho ayant la phase $\phi(p_1)$. Pendant le reste de la période d'apprentissage les coefficients sont figés à cette valeur calculée à la première étape.

Dans la deuxième étape on effectue une intégration des produits $\hat{\epsilon}^*_f(n).\epsilon_f(n)$ [ou des produits $\hat{\epsilon}^*_f(n).e(n)$] pendant un intervalle de temps $[p_2]$ égal à la période LT du signal d'apprentissage et centré autour de l'instant $t_2$, comme le montre la figure 7. Cette intégration fournit un temps $s(p_2)$ représentable par l'expression :

$$s(p_2) = (\sum_{[p_2]}^{n} \hat{\epsilon}^*_f(n).\epsilon_f(n)).\frac{1}{L\sigma^2} \qquad\qquad (26)$$

$$\text{ou} \qquad s(p_2) = (\sum_{[p_2]}^{n} \epsilon^*_f(n).e(n)).\frac{1}{L\sigma^2}$$

les termes $\epsilon_f(n)$ et $\hat{\epsilon}^*_f(n)$ étant respectivement le signal d'écho reçu et la valeur conjuguée du signal de copie d'écho $\hat{\epsilon}_f(n)$.

Pendant tout l'intervalle $[p_2]$ la phase simulée $\hat{\phi}(n)$ appliquée au circuit déphaseur 60 est mise à zéro de sorte que le signal $\epsilon_f(n)$ est égal au signal $\hat{\epsilon}_d(n)$ fourni par le filtre transversal 15 et que l'on peut donc écrire :

$$\hat{\epsilon}_f(n) = \vec{D}(n).\vec{C}(p_1),$$

soit, compte tenu du calcul de $\vec{C}(p_1)$ pendant la première étape :

$$\hat{\epsilon}_f(n) \# \vec{D}(n).\vec{k}.\exp j\phi(p_1)$$

En utilisant cette expression de $\epsilon_f(n)$ et l'expression (24) de $\epsilon_f(n)$, le calcul de $s(p_2)$ suivant l'expression (26) donne :

$$s(p_2) = (\sum_{[p_2]}^{n} \vec{k}^*.\vec{D}^*(n).\vec{D}(n).\vec{k}.\exp j[\phi(n) - \phi(p_1)]).\frac{1}{L\sigma^2}$$

$$= |k|^2.\exp j[\phi(p_2) - \phi(p_1)](\sum_{[p_2]}^{n} \vec{D}^*(n).\vec{D}(n)).\frac{1}{L\sigma^2}$$

EP 0 270 706 B1

Comme le signal d'apprentissage D(n) répond à la propriété d'autocorrélation (14) on a finalement :

$$s(p_2) \# |k|^2 . \exp j[\phi(p_2) - \phi(p_1)] \qquad (27)$$

$\phi(p_2)$ étant la valeur supposée constante de la phase $\phi(n)$ pendant l'intervalle de temps $[p_2]$.

L'intervalle $[p_2]$ ayant été choisi suffisamment éloigné de l'intervalle de temps $[p_1]$, l'écart de phase $\phi(p_2)-\phi(p_1)$ est une quantité appréciable qui peut être déterminée après le calcul de $s(p_2)$. On déduit en effet de la formule (27) :

$$\Phi(p_2)-\Phi(p_1) = \text{argument}[s(p_2)] = \text{Arc tg}\left[\frac{I_m[s(p_2)]}{R_e[s(p_2)]}\right] \qquad (28)$$

$R_e[s(p_2)]$ et $I_m[s(p_2)]$ étant respectivement la partie réelle et la partie imaginaire de $s(p_2)$.

Après le calcul de l'écart de phase $\phi(p_2)-\phi(p_1)$, on peut enfin calculer un terme de variation de phase $\Delta\omega T = 2\pi \Delta f \, T$ proportionnel à la dérive de fréquence $\Delta f$, en utilisant la formule :

$$\Delta\omega . T = \frac{\Phi(p_2)-\Phi(p_1)}{[p_2]-[p_1]} \qquad (29)$$

où $[p_2]-[p_1]$ est l'intervalle de temps $t_2-t_1$, mesuré en nombre de périodes T, entre les intervalles $[p_2]$ et $[p_1]$.

Puisqu'à l'issue de l'intervalle de temps $[p_1]$, on a fixé les coefficients du filtre transversal 15 de façon qu'un écho ayant la phase moyenne $\phi(p_1)$ de cet intervalle soit corrigé, on pourra corriger à partir de la fin de l'intervalle de temps $(p_2)$ un signal d'écho avec dérive de fréquence $\Delta f$, en produisant une phase simulée $\hat{\phi}(n)$ initialisée juste après l'intervalle $[p_2]$ à la valeur $\phi(p_2)-\phi(p_1)$ calculée suivant l'expression (28) et variant ensuite avec la pente $\Delta\omega . T$ calculée suivant l'expression 29.

On va maintenant montrer comment on peut mettre en oeuvre le procédé de l'invention dans un annuleur d'écho avec dérive de fréquence. Le procédé permet d'initialiser, après une période de temps d'apprentissage, différents paramètres de l'annuleur d'écho. Pendant toute cette période de temps, on émet un signal d'apprentissage dont les propriétés ont été définies ci-dessus. La mise en oeuvre de la première étape qui permet d'initialiser les coefficients du filtre transversal 15, par un calcul d'intégration des corrections des coefficients pendant un intervalle de temps $[p_1]$, peut s'effectuer exactement comme on l'a expliqué à l'aide des figures 2, 4 ou 5. Pour expliquer comment peut être mise en oeuvre la deuxième étape qui a pour but d'initialiser des paramètres concernant la phase simulée du signal d'écho, il est utile de rappeler comment cette phase simulée est asservie dans un annuleur d'écho avec dérive de fréquence. Par exemple, dans la demande de brevet français précitée N° 80 06 748, on a décrit un annuleur d'écho dont la phase simulée est asservie suivant la formule de récurrence :

$$\hat{\phi}(n+1) = \hat{\phi}(n) + \beta . I_m[\epsilon_f(n) . \hat{\epsilon}^*_f(n)] \qquad (30)$$

Dans cette formule de récurrence, $\beta$ est un coefficient de valeur faible par rapport à 1, qui détermine la grandeur de la correction à appliquer à la phase $\hat{\phi}(n)$ pour obtenir la phase $\hat{\phi}(n+1)$ à la récurrence suivante. Dans ce système d'asservissement, les corrections de phase sont effectuées à chaque période d'échantillonnage.

Sur la figure 8, on a d'abord représenté le générateur de phase simulée 61 qui, dans l'annuleur d'écho de la figure 6, met en oeuvre la formule de récurrence (30). Ce générateur décrit à la figure 8 de la demande de brevet précitée comporte le circuit 62 formant le terme $\hat{\epsilon}^*_f(n)$, le circuit multiplicateur 63 formant le produit $\hat{\epsilon}^*_f(n) . \epsilon_f(n)$ dont le circuit 64 ne retient que la partie imaginaire. Cette partie imaginaire qui constitue l'écart de phase $\delta\phi$ entre la phase réelle et la phase simulée du signal d'écho est multipliée par le coefficient $\beta$ dans le circuit multiplicateur 65. La sortie du circuit 65 forme les termes de correction de phase $\beta_m . I[\epsilon(n) . \hat{\epsilon}^*_f(n)]$ qui sont accumulés dans l'accumulateur formé par le circuit additonneur 66 et la mémoire 67. Cet accumulateur fournit la phase simulée $\hat{\phi}(n)$ au circuit déphaseur 60. Dans ce générateur

16

61, le circuit multiplicateur 65 par le coefficient $\beta$ joue dans la boucle d'asservissement de phase le rôle d'un filtre de boucle du premier ordre et comme on l'a indiqué dans la demande de brevet précitée, il est avantageux d'utiliser un filtre de boucle du deuxième ordre qui est constitué par les circuits inclus dans le rectangle pointillé 68. Ce filtre 68 est formé par le circuit multiplicateur 69 qui multiplie l'écart de phase $\delta\phi$ par un coefficient $\gamma$ inférieur à 1. Le produit $\gamma\delta\phi$ est appliqué à un accumulateur formé par le circuit additionneur 70 et la mémoire 71. Le signal de sortie de cet accumulateur 70,71 est ajouté par le circuit additionneur 72 au signal de sortie du circuit multiplicateur 65. Le signal de sortie du circuit additionneur 72 est appliqué à l'accumulateur 66,67 qui fournit la phase simulée $\hat{\phi}(n)$.

Avant le fonctionnement en poursuite de ce circuit de réglage de la phase simulée, deux paramètres doivent être initialisés, d'une part le contenu de la mémoire 67 de l'accumulateur 66,67, d'autre part le contenu de la mémoire 71, de l'accumulateur 70,71. Cette initialisation se fait à la fin de la deuxième étape en transférant dans la mémoire 67, la différence de phase calculée $\phi(p_2)-\phi(p_1)$ qui est la phase initiale attribuée à la phase simulée $\hat{\phi}(n)$ et en transférant dans la mémoire 71, la quantité $\Delta\omega.T$, qui permet d'obtenir la pente initiale de la phase simulée.

Pour obtenir ces deux quantités initiales, on calcule d'abord selon le procédé de l'invention la quantité $s(p_2)$. Pour cela on utilise un circuit 73 qui met en oeuvre la formule (26). Le circuit 73 qui est constitué d'une façon usuelle pour former un accumulateur, reçoit les produits $\epsilon_f(n).\hat{\epsilon}^*_f(n)$ formés à la sortie du circuit multiplicateur 63 et accumule ces produits pendant l'intervalle de temps $[p_2]$, après avoir été mis à zéro au début de cet intervalle. La quantité complexe $s(p_2)$ ainsi formée à la fin de l'intervalle $[p_2]$ est appliquée au circuit 74 qui forme la différence de phase $\phi(p_2)-\phi(p_1)$ en mettant en oeuvre la formule (28). Enfin la différence $\phi(p_2)-\phi(p_1)$ est appliquée au circuit 75 auquel est appliqué également l'écart de temps $[p_2]-[p_1]$ pour former la variation de phase $\Delta\omega.T$ selon la formule (29). Les quantités ainsi calculées $\phi(p_2)-\phi(p_1)$ et $\Delta\omega.T$ sont transférées simultanément dans les mémoires 67 et 71.

Comme le montre l'exemple que l'on vient de décrire, pour régler la phase simulée $\hat{\phi}(n)$ pendant la période de poursuite, ou pour calculer la quantité $s(p_2)$ pendant la période d'initialisation, on utilise la même quantité $\hat{\epsilon}^*_f(n).\epsilon_f(n)$ qui est représentative de l'écart de phase entre le signal d'écho et le signal de copie d'écho. Dans d'autres modes de réalisation d'annuleur d'écho à phase variable tels que ceux décrits dans la demande de brevet N° 80 06 748, on peut calculer de manière différente une quantité représentative de cet écart de phase, qui est nécessaire de toute manière pour un circuit de réglage de phase simulée par récurrences successives. Il est clair que dans ces modes de réalisation, on utilisera de préférence, la quantité représentative de l'écart de phase déjà calculée, pour former la quantité $s[p_2]$.

Au lieu d'utiliser la formule (28) pour obtenir la différence de phase $\phi(p_2)-\phi(p_1)$, il est possible d'utiliser des algorithmes plus simples à mettre en oeuvre. L'un de ces algorithmes consiste à mettre à jour, à un rythme d'horloge très rapide, une variable auxiliaire INT selon la formule de récurrence :

$$INT(m+1) = INT(m) + \gamma[I_m[s(p_2)] - INT(m).r(p_2)]] \qquad (31)$$

Dans cette formule $I_m[s(p_2)]$ est la partie imaginaire de la quantité $s(p_2)$ déjà définie, $\gamma$ est une constante d'intégration et $r(p_2)$ est une quantité calculée selon l'une ou l'autre de ces expressions :

$$r(p_2) = (\sum_{[p_2]}^{n} \epsilon_f(n).\epsilon^*_f(n)).\frac{1}{L\sigma^2}$$

$$r(p_2) = (\sum_{[p_2]}^{n} \hat{\epsilon}_f(n).\hat{\epsilon}^*_f(n)).\frac{1}{L\sigma^2} \qquad (32)$$

On peut montrer que la quantité $r(p_2)$ est pratiquement égale au module $|k|^2$ de la quantité $s(p_2)$ : voir formule (27).

Dans ces conditions la formule de récurrence (31) peut s'écrire :

$$INT(m+1) = INT(m).[1-\gamma.|k|^2] + \gamma.|k|^2 \sin[\phi(p_2)-\phi(p_1)]$$

On en déduit qu'après un nombre suffisant de récurrences et à condition que $\gamma.|k|^2$ soit inférieur à 1, la variable auxiliaire INT prend pratiquement la valeur :

$$INT(\infty) = \sin[\phi(p_2)-\phi(p_1)]$$

17

On peut alors obtenir aisément la différence de phase $\phi(p_2)-\phi(p_1)$ par lecture dans une table de fonction arc sin, à des adresses INT.

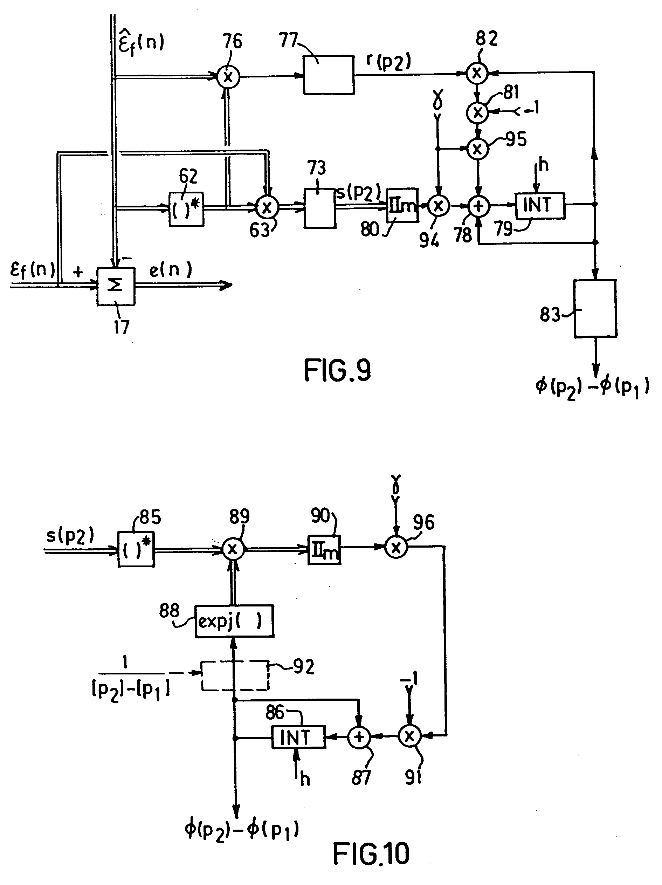

La figure 9 montre comment peut se mettre en oeuvre l'algorithme (31) pour calculer $\phi(p_2)-\phi(p_1)$ à partir des signaux $\epsilon_f(n)$ et $\hat{\epsilon}_f(n)$. La quantité $s(p_2)$ est formée comme sur la figure 8 et disponible à la sortie du circuit 73. D'autre part, le circuit multiplicateur 76 fournit les produits $\hat{\epsilon}_f(n).\hat{\epsilon}^*_f(n)$ apparaissant dans la formule (32). Ces produits sont accumulés pendant l'intervalle de temps $[p_2]$ dans le circuit 77 qui fournit ainsi la quantité $r(p_2)$. Pour mettre à jour la variable auxiliaire INT selon la formule de récurrence (31), on utilise un accumulateur formé du circuit additionneur 78 et de la mémoire 79 qui contient la variable auxiliaire. Le circuit additionneur 78 a une entrée connectée à la sortie de la mémoire 79, une deuxième entrée qui reçoit le produit $\gamma.I_m[s(p_2)]$ formé à l'aide des circuits 80 et 94 et une troisième entrée qui reçoit le produit $-\gamma.INT(m).r(p_2)$ formé à l'aide des circuits 82,81,95 connectés comme l'indique la figure. L'accumulation dans l'accumulateur 78,79 est effectuée à une fréquence d'horloge h très élevée, vis à vis de la fréquence $1/T$ de modulation, de sorte que très rapidement, à la suite de l'intervalle de temps $[p_2]$, on obtient pratiquement à la sortie de l'accumulateur la quantité $INT(\infty)$. Cette dernière sert d'adresse pour lire dans la table 83 de la fonction arc sin, la différence de phase $\phi(p_2)-\phi(p_1)$ qui est utilisée comme on l'a expliqué à l'aide de la figure 8.

On peut obtenir encore plus simplement la différence de phase $\phi(p_2)-\phi(p_1)$, en utilisant un autre algorithme qui consiste à mettre à jour une variable auxiliaire INT selon la formule de récurrence :

$$INT(m+1) = INT(m) - \gamma.I_m[s^*(p_2).exp.j.INT(m)] \qquad (33)$$

Compte tenu de la valeur de $s(p_2)$ donnée par la formule (27), on peut montrer que la formule de récurrence (33) s'écrit :

$$INT(m+1) = INT(m) - \gamma.|k|^2 \sin[INT(m)-(\phi(p_2)-\phi(p_1))]$$

Une solution approchée de cette équation est :

$$INT(m+1) = INT(m)[1-\gamma.|k|^2] + \gamma.k^2[\phi(p_2)-\phi(p_1)]$$

On en déduit qu'après un nombre suffisant de récurrences, la variable auxiliaire INT prend pratiquement la valeur :

$$INT(\infty) = \phi(p_2)-\phi(p_1)$$

La figure 10 montre comment peut se mettre en oeuvre l'algorithme (33) pour obtenir la différence de phase $\phi(p_2)-\phi(p_1)$. La quantité $s(p_2)$ formée comme l'indique la figure 8 est appliquée au circuit 85 qui en prend la valeur conjuguée $s^*(p_2)$. La variable auxiliaire INT est contenue dans la mémoire 86 d'un accumulateur formé par cette mémoire et le circuit additionneur 87. La sortie de la mémoire 86 est connectée au circuit 88 qui forme la quantité $exp.j.INT(m)$. Cette quantité est multipliée $s^*(p_2)$ à l'aide du circuit multiplicateur 89. Le circuit 90 extrait du produit ainsi formé la partie imaginaire qui est multipliée par le coefficient $\gamma$ à l'aide du circuit 96, ce dernier produit étant changé de signe à l'aide du circuit 91. La sortie du circuit 91 est connectée à une entrée du circuit additionneur 87. L'accumulation dans l'accumulateur 86,87 est effectuée à un rythme d'horloge h très élevé et très rapidement après l'intervalle de temps $[p_2]$, on obtient à la sortie de l'accumulateur la différence de phase recherchée $\phi(p_2)-\phi(p_1)$.

On peut obtenir la variation de phase $\Delta\omega.T$ nécessaire également pour l'initialisation de l'annuleur d'écho, en modifiant l'algorithme (33) de la façon suivante :

$$INT(m+1) = INT(m) - I_m[s^*(p_2).exp.j \frac{1}{[p_2]-[p_1]}] \qquad (34)$$

Il est alors aisé de voir que la variable auxiliaire INT prend après un nombre suffisant de récurrences la valeur :

$$INT(\infty) = \frac{\Phi(p_2)-\Phi(p_1)}{[p_2]-[p_1]}$$

soit : INT(∞) = Δω.T.

La mise en oeuvre de l'algorithme (33) peut s'effectuer comme le montre la figure 10, en utilisant un circuit 92, représenté en pointillé, qui multiplie la quantité INT(m) appliquée au circuit 88 par le coefficient

$$\frac{1}{[p_2]-[p_1]}.$$

Avec cette disposition le contenu de l'accumulateur 86,87 prend pratiquement la valeur de la variation de phase ΔωT. Finalement les algorithmes (33) et (34) peuvent être mis en oeuvre de la même manière conformément au schéma de la figure 10. Dans une première phase de temps, on fixe à la valeur 1 le coefficient appliqué au circuit multiplicateur 92 et l'accumulateur 86,87 fournit la différence de phase $\phi(p_2)$-$\phi(p_1)$ qui est transférée dans la mémoire 67 de la figure 8. Dans une deuxième phase de temps, on fixe à la valeur

$$\frac{1}{[p_2]-[p_1]}$$

ledit coefficient et la variation ΔωT se trouve disponible dans la mémoire 86, qui peut s'identifier à la mémoire 71 de la figure 8.

On sait que dans certains annuleurs d'écho, on travaille directement sur le signal reçu réel, sans utiliser de circuit tel que le circuit 18 de la figure 1 pour former un signal complexe. Dans ces annuleurs d'écho, on applique au circuit de différence 17 de l'annuleur d'écho, d'une part le signal reçu échantillonné et d'autre part la partie réelle du signal complexe $\overset{''}{\epsilon}$(n)fourni par le filtre transversal 15. Ce dernier reçoit toujours un signal de données complexe et travaille toujours avec des coefficients complexes fournis par un circuit de réglage tel que le circuit 16 de la figure 1.

Un procédé conforme à l'invention permet également de réduire le temps de convergence d'un annuleur d'écho linéaire. On peut considérer le signal d'écho reçu sur la voie réception du modem et directement utilisé dans l'annuleur d'écho maintenant considéré, comme la partie réelle du signal d'écho complexe qui serait formé par le circuit 18 dans le cas de l'annuleur d'écho de la figure 1. Après échantillonnage, ce signal d'écho reçu est $\epsilon_R$(b) et peut donc s'écrire :

$\epsilon_R(n) = R_e[\epsilon(n)] = \epsilon(n)+\epsilon^*(n)$

au facteur 1/2 près.

Il en résulte qu'un signal de données D(n) émis pendant un premier intervalle de temps procure un signal d'écho $\epsilon_{R1}$(n) ayant la forme :

$$\epsilon_{R1}(n) = \underset{\rightarrow}{D}(n).\vec{k} + \underset{\rightarrow}{D^*}(n).\vec{k^*} \qquad (35)$$

Si, selon le procédé usuel de l'invention, ce signal D(n) est le signal d'apprentissage périodique ayant les caractéristiques d'autocorrélation (14) et si l'on calcule les coeficients par intégration des corrections des coefficients pendant un intervalle $[q_1]$ où l'écho procuré par le signal émis est reçu, les valeurs calculées de ces coefficients peuvent être écrites de façon simplifiée, à un facteur constant près :

$$\vec{C}_1(q) = \overset{n}{\underset{[q_1]}{\Sigma}} \epsilon_{R1}(n).\vec{D^*}(n)$$

soit, en utilisant la formule (35) :

$$\vec{C}_1(q) = \vec{k} + \overline{\overline{E}}(n).k^*  \qquad (36)$$

où $\overline{\overline{E}}$ est une matrice carrée d'ordre N, telle que :

$$\overline{\overline{E}}(n) = \sum_{n=0}^{L-1} \vec{D}^*(n).\vec{D}(n)$$

Pour qu'à l'issue d'un intervalle $[q_1]$ d'intégration, on obtienne pour les coefficients $\vec{C}_1(q)$ du filtre transversal, les échantillons $\vec{k}$ de la réponse impulsionnelle du trajet d'écho, il est nécessaire que la matrice $\overline{\overline{E}}(n)$ soit nulle, ce qui peut s'obtenir avec un signal d'apprentissage D(n) devant répondre non seulement à la condition (14) soit :

$$\sum_{n=0}^{L-1} d(n).d^*(n-i) = 0 \quad \begin{array}{l} \text{pour } i \neq 0 \\ \\ i = 1,2,\ldots N-1 \end{array}$$

mais aussi à la condition :

$$\sum_{n=0}^{L-1} d^*(n).d^*(n-i) = 0 \quad \text{pour } i = 0,1,2,\ldots N-1$$

Pour éviter cette nouvelle condition à imposer au signal d'apprentissage D(n), on émet, selon une variante avantageuse du procédé de l'invention, un autre signal d'apprentissage $D_+(n)$, pendant un deuxième intervalle de temps, tel que l'écho procuré par le premier signal D(n) a disparu. Ce signal $D_+(n)$ est tel que :

$$D_+(n) = jD(n)$$

Ce signal émis procure un signal d'écho $\epsilon_{R2}(n)$ tel que :

$$\epsilon_{R2} = D_+(n).\vec{k} + D^*_+(n).\vec{k}$$

Si, sur la base du signal $D_+(n)$ et pendant un intervalle de temps $[q_2]$, on calcule les coefficients du filtre transversal, ce calcul peut s'écrire :

$$\vec{C}_2(q) = \sum_{[q_2]}^{n} \epsilon_{R2}(n).\vec{D}^*_+(n)$$

En tenant compte de l'expression ci-dessus de $\epsilon_{R2}(n)$, on en déduit :

$$\vec{C}_2(q) = \vec{k} + \overline{\overline{F}}(n)\vec{k}^*  \qquad (37)$$

où $\overline{\overline{F}}(n)$ est une matrice carrée d'ordre N, telle que :

$$F(n) = \sum_{n=0}^{L-1} \vec{D}^*_+(n).\vec{D}^*_+(n)$$

Puisque $D_+(n) = jD(n)$, on a

$$\bar{\bar{F}}(n) = - \bar{\bar{E}}(n).$$

Il en résulte, d'après les formules (36) et (37), qu'en formant la somme des coeficients $C_1(q)$ et $C_2(q)$ calculés respectivement par intégration pendant les intervalles de temps $[q_1]$ et $[q_2]$, on obtient à un facteur constant près, les coefficients désirés, soient :

$$\vec{C}(q) = \vec{C}_1(q) + \vec{C}_2(q) = \vec{k}$$

On va maintenant montrer comment le procédé conforme à l'invention peut s'appliquer à un annuleur d'écho avec dérive de fréquence,, dans lequel également on travaille sur le signal reçu sans former de signal complexe correspondant. Un annuleur d'écho de ce genre est montré par exemple à la figure 11 de la demande de brevet précitée N° 80 06 748. Cet annuleur d'écho a la structure générale montrée sur la figure 6 de la présente demande de brevet, mais pour la commande du circuit 16 de réglage des coefficients du filtre transversal 15 et pour la commande du circuit 61 de réglage de la phase simulée du signal d'écho, il n'utilise que des signaux réels.

Pour initialiser les paramètres d'un tel annuleur d'écho, on utilise unprocédé analogue à celui déjà décrit dans la présente demande pour un annuleur d'écho avec dérive de fréquence, travaillant sur un signal d'écho complexe. Ce procédé comporte donc deux étapes, l'une servant à initialiser les coefficients du filtre transversal, l'autre servant à initialiser la phase simulée du signal d'écho et la pente de la variation de cette phase. Mais pour réaliser chacune de ces étapes, il est nécessaire dans un annuleur d'écho utilisant seulement la partie réelle du signal d'écho, d'émettre d'abord le signal d'apprentissage $D(n)$, puis le signal $D_+(n) = jD(n)$ comme on vient de l'expliquer.

Un signal $D(n)$ émis pendant l'une ou l'autre de ces deux étapes, engendre un signal d'écho réel $\epsilon_{R1}(n)$ ayant la forme :

$$\epsilon_{R1}(n) = D(n)\vec{k} \exp j\Phi(n) + D^*(n)\vec{k}^* \exp -j\Phi(n)$$

$\Phi(n)$ étant la phase du signal d'écho supposée constante pendant l'étape considérée. Si l'on émet le signal $D_+(n) = jD(n)$, on obtient un signal d'écho $\epsilon_{R2}(n)$ ayant la forme :

$$\epsilon_{R2}(n) = jD(n)\vec{k} \exp j\Phi(n) + jD^*(n)\vec{k}^* \exp - j\Phi(n).$$

La première étape consiste donc, au lieu de calculer des coefficients $\vec{C}_1(p)$ sur un seul intervalle de temps $[p_1]$ avec le signal $D(n)$ et $\epsilon_{R1}(n)$ (voir figure 7), à calculer aussi des coefficients $\vec{C}_2(p)$ avec le signal $jD(n)$ et $\epsilon_{R2}(n)$ sur un deuxième intervalle $[p'_1]$ de même durée et assez rapproché pour que la phase du signal d'écho ait pratiquement la même valeur $\Phi(p_1)$ pendant ces deux intervalles de temps. De la même manière qu'on l'a déjà expliqué, on peut montrer que la somme des coefficients ainsi calculés a la valeur ci-dessous, à un coefficient 1/2 près :

$$\vec{C}(p) = \vec{C}_1(p) + \vec{C}_2(p) = \vec{k}.\exp j\Phi(p_1)$$

Pendant le reste de la période d'apprentissage, les coefficients du filtre transversal 15 sont figés à cette valeur qui permet de compenser le signal d'écho ayant la phase $\Phi(p_1)$.

Une méthode possible pour réaliser la deuxième étape est à rapprocher de celle déjà expliquée pour un signal d'écho complexe et basée sur le calcul d'une quantité $s(p_2)$ selon la formule (26). Selon cette méthode on calcule sur un intervalle de temps $[p_2]$, avec le signal $D(n)$ et $\epsilon_{R1}(n)$, une quantité $s_1(p_2)$ telle que :

$$s_1(p_2) = (\sum_{[p_2]}^{n} \hat{\epsilon}^*_f(n) . \epsilon_{R1}(n)) . \frac{1}{L\sigma^2}$$

Puis on calcule avec le signal $D_+(n) = jD(n)$ et $\epsilon_{R2}(n)$ sur un intervalle de temps $[p'_2]$ de même durée que $[p_2]$ et assez rapproché pour que la phase du signal d'écho ait la même valeur $\phi(p_2)$, une quantité $s_2(p_2)$ telle que :

$$s_2(p_2) = (\sum_{[p'_2)}^{n} \hat{\epsilon}^*_f(n) . \epsilon_{R2}(n)) . \frac{1}{L\sigma^2}$$

De la même manière qu'on l'a déjà expliqué, on peut montrer qu'en formant la somme des deux quantités $s_1(p_2)$ et $s_2(p_2)$, on obtient la quantité $s(p_2)$ telle que :

$$s(p_2) = s_1(p_2) + s_2(p_2) \# |k|^2 \exp j[\phi(p_2)-\phi(p_1)]$$

La quantité $s(p_2)$ ainsi calculée a exactement la même valeur que celle de la formule (27). Par les mêmes calculs ou les mêmes algorithmes que ceux que l'on a déjà décrits, on peut en déduire la différence de phase initiale $\phi(p_2)-\phi(p_1)$ et la variation de phase initiale $\Delta\omega.T$ à transférer dans des mémoires du générateur de phase simulée de l'annuleur d'écho.

Une autre méthode possible pour réaliser la deuxième étape consiste à calculer, au lieu des quantités $s_1(p_2)$ et $s_2(p_2)$, les quantités $s'_1(p_2)$ et $s'_2(p_2)$ telles que :

$$s'_1(p_2) = \sum_{[p_2]}^{n} \hat{\epsilon}_{I1}(n) . \epsilon_{R1}(n)$$

$$s'_2(p_2) = - \sum_{[p_2]}^{n} \hat{\epsilon}_{I2}(n) . \epsilon_{R2}(n)$$

avec $\hat{\epsilon}_I(n) = I_m[\hat{\epsilon}_f(n)]$.

On peut montrer qu'en formant la somme des deux quantités $s'_1(p_2)$ et $s'_2(p_2)$, on obtient la quantité :

$$s'(p_2) = s'_1(p_2) + s'_2(p_2) = 4j|k|^2 \sin[\phi(p_2)-\phi(p_1)]$$

De la quantité $s'(p_2)$ on peut déduire la différence de phase $\phi(p_2)-\phi(p_1)$ et la variation de phase $\Delta\omega.T$.

Dans cette dernière méthode pour la deuxième étape, les multiplications nécessaires pour le calcul des quantités $s'_1(p_2)$ et $s'_2(p_2)$ ne portent que sur deux signaux réels, ce qui est plus simple que les multiplications nécessaires dans l'autre méthode pour le calcul des quantités $s_1(p_2)$ et $s_2(p_2)$ qui portent sur un signal réel et un signal complexe. On peut noter que la dernière méthode convient particulièrement pour l'initialisation de l'annuleur d'écho de la figure 11 de la demande de brevet N° 80 06 748, dans lequel la phase simulée est réglée par des corrections proportionnelles au produit des mêmes signaux réels. Enfin, dans les formules ci-dessus permettant de calculer les quantités $s_1(p_2)$, $s_2(p_2)$, $s'_1(p_2)$, $s'_2(p_2)$, on peut remplacer les signaux réels reçus $\epsilon_{R1}(n)$ et $\epsilon_{R2}(n)$ par les signaux de différence correspondants $e_1(n)$ et $e_2(n)$.

## Revendications

1. Procédé destiné à réduire le temps de convergence d'un annuleur d'écho faisant partie d'un système comprenant au moins deux équipements émetteurs-récepteur dont un est dit équipement local et l'autre équipement distant, cet annuleur d'écho qui est connecté dans un équipement émetteur-récepteur entre deux voies unidirectionnelles émission et réception couplées à une voie bidirectionnelle (6) et qui est utilisé pour annuler un signal d'écho se produisant avec une dérive de fréquence dans la voie réception en réponse à un signal fourni à la voie émission, comprenant un filtre transversal à N coefficients réglables (15) traitant un signal déduit du signal fourni à la voie émission, un circuit de différence (17) pour former un signal de différence entre deux signaux formés respectivement à partir du signal dans la voie réception et du signal de sortie du filtre transversal, et un circuit déphaseur (60) qui est connecté entre la sortie du filtre transversal et une entrée du circuit de différence et qui reçoit d'un générateur de phase, une phase simulée pour compenser dans le signal de différence la phase du signal d'écho, ce procédé étant basé :

- sur l'émission dans l'équipement local d'un signal de données d'apprentissage D(n) formé de données émises à des instants nT, se reproduisant périodiquement après une durée LT au moins égale à NT et répondant à la propriété P1 :

$$\sum_{n=0}^{L-1} d(n).d^*[(n-i)\bmod L] = 0 \text{ pour } i \neq 0 \text{ et } 1 \leqslant i \leqslant N-1$$

ou à la propriété P2 :

$$\sum_{n=0}^{L-1} d(n).d^*[(n-i)\bmod L] = -1 \text{ pour } i \neq 0 \text{ et } 1 \leqslant i \leqslant N-1,$$

d et d* étant respectivement la valeur d'une donnée du signal D(n) et sa valeur conjuguée.

- sur le calcul des coefficients du filtre transversal effectué après l'instant d'apparition du signal d'écho engendré par ledit signal d'apprentissage, selon l'expression :

$$\vec{C} = \vec{C}_0 + \frac{1}{L\sigma^2} \sum_{n=0}^{L-1} e(n).\vec{D}^*(n)$$

$\vec{C}_0$ et $\vec{C}$ étant respectivement les vecteurs des N coefficients du filtre transversal au début et à la fin de la durée de calcul des coefficients,
e(n) étant le signal de différence,
D* étant le vecteur des valeurs conjuguées des N données emmagasinées dans le filtre transversal,
$\sigma^2$ étant un terme constant, représentatif de la puissance de chaque donnée émise, ce procédé comportant au moins les opérations suivantes :
- l'émission dudit signal d'apprentissage D(n) pendant deux intervalles de temps [p_1], [p_2] ayant chacun ladite durée LT, au cours desquels la phase du signal d'écho a des valeurs $\phi(p_1)$, $\phi(p_2)$ qui sont chacune sensiblement constantes, l'écart entre ces deux intervalles étant choisi de sorte que $\phi(p_2) - \phi(p_1)$ soit une quantité appréciable ;
- pendant l'intervalle de temps [p_1], le calcul des coefficients du filtre transversal,
- pendant l'intervalle de temps [p_2]
  . le maintien à leurs valeurs calculées des coefficients du filtre transversal,
  . le maintien à zéro de la phase simulée appliquée audit circuit déphaseur,
  . le calcul d'une quantité s(p_2) formée en accumulant des produits de deux facteurs déduits l'un du signal de sortie du circuit déphaseur, l'autre du signal de différence ou du signal reçu ;
- à la fin de l'intervalle de temps [p_2], un traitement pour déduire de la quantité s(p_2) le terme de différence de phase $\phi(p_2) - \phi(p_1)$ par le calcul de l'argument [S(p_2)] et un traitement pour déduire de cette différence de phase un terme de variation de phase $\Delta\omega.T$ formé en utilisant l'expression :

$$\Delta\omega = \frac{\phi(p_2)-\phi(p_1)}{t_2-t_1}$$

$\Delta\omega$ étant la variation de pulsation correspondant à la dérive de fréquence, $t_2-t_1$ étant l'écart de temps moyen entre les intervalles de temps [p_2] et [p_1], les deux termes ainsi formés étant utilisés pour l'initialisation dudit circuit générateur de phase.

**2.** Procédé selon la revendication 1, utilisé dans un annuleur d'écho dans lequel le signal de différence e-(n) est un signal complexe résultant de la différence entre deux signaux complexes déduits l'un du signal reçu et l'autre du signal de sortie du circuit déphaseur, caractérisé en ce que les coefficients $\vec{C}$ du filtre transversal et ladite quantité $s(p_2)$ sont calculés en émettant un seul signal d'apprentissage D-(n).

**3.** Procédé selon la revendication 1, utilisé dans un annuleur d'écho dans lequel le signal de dfférence e-(n) est un signal réel résultant de la différence entre deux signaux réels déduits l'un du signal reçu et l'autre du signal de sortie du circuit déphaseur, caractérisé en ce que les coefficients C du filtre transversal sont obtenus en formant la somme de coefficients calculés en émettant un premier signal d'apprentissage D(n) et de coefficients calculés en émettant un deuxième signal d'apprentissage $D_+(n)$ = jD(n) et ladite quantité $s(p_2)$ est obtenue en formant la somme d'une quantité $s_1(p_2)$ calculée en émettant le premier signal d'apprentissage D(n) et d'une quantité $s_2(p_2)$ calculée en émettant le deuxième signal d'apprentissage $D_+(n)$.

**4.** Procédé selon l'une des revendications 2 ou 3, caractérisé en ce que le calcul d'une quantité $s(p_2)$, $s_1(p_2)$ ou $s_2(p_2)$ est effectué selon l'une ou l'autre des deux expressions :

$$(\sum_{n=0}^{L-1} \hat{\varepsilon}^*{}_f(n).\varepsilon_f(n)).\frac{1}{L\sigma^2}$$

$$(\sum_{n=0}^{L-1} \hat{\varepsilon}^*{}_f(n).e(n)).\frac{1}{L\sigma^2}$$

$\hat{\varepsilon}^*{}_f(n)$ étant la valeur conjuguée du signal $\hat{\varepsilon}_f(n)$ fourni par le circuit déphaseur,
$\varepsilon_f(n)$ étant un signal complexe ou réel déduit du signal reçu.

**5.** Procédé selon la revendication 3, caractérisé en ce que le calcul d'une quantité $s_1(p_2)$ ou $s_2(p_2)$ est effectué selon l'une ou l'autre des deux expressions :

$$(\sum_{n=0}^{L-1} \varepsilon_f^I(n).\varepsilon_f(n)).\frac{1}{L\sigma^2}$$

$$(\sum_{n=0}^{L-1} \varepsilon_f^I(n).e(n)).\frac{1}{L\sigma^2}$$

$\varepsilon_f^I(n)$ étant la partie imaginaire du signal fourni par le circuit déphaseur.

**6.** Procédé selon la revendication 4 caractérisé en ce que le traitement à la fin de l'intervalle de temps $[p_2]$ pour former la différence de phase $\phi(p_2)-\phi(p_1)$ consiste à calculer cette différence de phase selon l'expression :

$$\Phi(p_2)-\Phi(p_1) = arc\ tg\ \frac{I_m([s(p_2)]}{R_e[s(p_2)]},$$

où $R_e[s(p_2)]$ et $I_m[s(p_2)]$ sont respectivement la partie réelle et la partie imaginaire de la quantité $s(p_2)$.

**7.** Procédé selon la revendication 4, caractérisé en ce que pendant l'intervalle de temps $[p_2]$, on calcule en outre la quantité $r(p_2)$ selon l'une ou l'autre des deux expressions :

$$r(p_2) = (\sum_{n=0}^{L-1} \varepsilon_f(n).\varepsilon^*{}_f(n)).\frac{1}{L\sigma^2}$$

$$r(p_2) = (\sum_{n=0}^{L-1} \hat{\varepsilon}_f(n).\hat{\varepsilon}^*{}_f(n)).\frac{1}{L\sigma^2}$$

et le traitement à la fin de l'intervalle de temps $[p_2]$ pour former la différence de phase $\phi(p_2)-\phi(p_1)$ consiste :

- à mettre à jour une variable auxiliaire INT selon la formule de récurrence :

INT$(m+1)$ = INT$(m)$ + $\gamma.I_m[s(p_2)]$ - $\gamma$.INT$(m).r(p_2)$,

avec un rythme élevé de façon que la variable auxiliaire atteigne pratiquement sa valeur finale INT$(\infty)$ en un temps relativement court,
- à calculer la différence de phase $\phi(p_2)-\phi(p_1)$ selon l'expression : $\phi(p_2)-\phi(p_1)$ = arc sin INT$(\infty)$.

8. Procédé selon la revendication 4, caractérisé en ce que le traitement à la fin de l'intervalle de temps $[p_2]$ pour former la différence de phase $\phi(p_2)-\phi(p_1)$ consiste à mettre à jour une variable auxiliaire INT$_0$ selon la formule de récurrence INT$_0(m+1)$ = INT$_0(m)-\gamma.I_m[s^*(p_2).exp.j.$INT$_0(n)]$, avec un rythme élevé de façon que la variable auxiliaire atteigne pratiquement sa valeur finale en un temps relativement court, cette valeur finale étant égale à la différence de phase $\phi(p_2)-\phi(p_1)$.

9. Procédé selon la revendication 8, caractérisé en ce que la variation de phase $\Delta\omega.T$ est obtenue en mettant à jour ladite variable auxiliaire INT$_0$ selon la formule de récurrence :

$$INT_0(m+1) = INT_0(m) - \gamma.I_m[s^*(p_2).exp.j.\frac{INT_0(m)}{t_2-t_1}],$$

avec un rythme élevé de façon que la variable auxiliaire atteigne pratiquement sa valeur finale en un temps relativement court, cette valeur finale étant égale à la variation de phase $\Delta\omega.T$.

10. Dispositif destiné à mettre en oeuvre le procédé selon l'une des revendications 1 à 9, comportant :
- disposé dans l'équipement local, un générateur d'un signal de données d'apprentissage D(n) (25) formé de données émises à des instants nT, se reproduisant périodiquement après une durée LT au moins égale à NT et répondant à la propriété P1 :

$$\sum_{n=0}^{L-1} d(n).d^*[(n-i)modulo\ L] = 0\ pour\ i \neq 0\ et\ 1 \leqslant i \leqslant N-1$$

ou à la propriété P2 :

$$\sum_{n=0}^{L-1} d(n).d^*[(n-i)modulo\ L] = -1\ pour\ i \neq 0\ et\ 1 \leqslant i \leqslant N-1,$$

d et d* étant respectivement la valeur d'une donnée du signal D(n) et sa valeur conjuguée,
- un circuit de réglage (16) pour le calcul des coefficients du filtre transversal, effectué après l'instant d'apparition du signal d'écho engendré par ledit signal d'apprentissage, selon l'expression :

$$\vec{C} = \vec{C_0} + \frac{1}{L\sigma^2}\sum_{n=0}^{L-1} e(n).\vec{D^*}(n)$$

$\vec{C_0}$ et $\vec{C}$ étant respectivement les vecteurs des N coefficients du filtre transversal au début et à la fin de la durée de calcul des coefficients,

e(n) étant le signal de différence,

D* étant le vecteur des valeurs conjuguées des N données emmagasinées dans le filtre transversal,

$\sigma^2$ étant un terme constant, représentatif de la puissance de chaque donnée émise,

- des moyens pour mettre en route ledit générateur pendant deux intervalles de temps $[p_1]$, $[p_2]$ ayant chacun ladite durée LT, au cours desquels la phase du signal d'écho a des valeurs $\phi(p_1)$, $\phi(p_2)$ qui sont chacune sensiblement constantes, l'écart entre ces deux intervalles étant choisi de sorte que $\phi(p_2) - \phi(p_1)$ soit une quantité appréciable,

- des moyens pour mettre en route ledit circuit de réglage pendant l'intervalle de temps $[p_1]$, des moyens pour mettre en route pendant l'intervalle de temps $[p_2]$ :

. des moyens de maintien à leurs valeurs calculées des coefficients du filtre transversal,

. des moyens de maintien à zéro de la phase simulée appliquée audit circuit déphaseur,

. des moyens de calcul d'une quantité $s(p_2)$ (73) formée en accumulant des produits de deux facteurs déduits l'un du signal de sortie du circuit déphaseur, l'autre du signal de différence ou du signal reçu ,

et :

- des moyens de traitement (74) pour déduire de la quantité $s(p_2)$, à la fin de l'intervalle de temps $[p_2]$, le terme de différence de phase $\phi(p_2) - \phi(p_1)$ par le calcul de l'argument $[S(p_2)]$ et pour déduire de cette différence de phase un terme de variation de phase $\Delta\omega.T$ formé en utilisant l'expression :

$$\Delta\omega = \frac{\Phi(p_2) - \Phi(p_1)}{t_2 - t_1}$$

$\Delta\omega$ étant la variation de pulsation correspondant à la dérive de fréquence, $t_2-t_1$ étant l'écart de temps moyen entre les intervalles de temps $[p_2]$ et $[p_1]$, les deux termes ainsi formés étant utilisés pour l'initialisation dudit circuit générateur de phase.

**11.** Dispositif selon la revendication 10, caractérisé en ce qu'il comporte pour le calcul des coefficients du filtre transversal de l'annuleur d'écho :

- des moyens de calcul (28) pour former à chaque instant nT, les produits des N valeurs conjuguées des N données stockées dans le filtre transversal et du signal de différence ou du signal reçu,

- des moyens de calcul (29) pour pondérer ces produits par le coefficient de pondération $1/L\sigma^2$,

- des accumulateurs (33) pour accumuler les produits pondérés depuis le début jusqu'à la fin de l'intervalle de temps de calcul de durée LT, les coefficients désirés du filtre transversal étant obtenus simultanément dans ces accumulateurs à la fin dudit intervalle de temps,

- des moyens de calcul (62) pour former à chaque instant nT le produit d'un signal déduit du signal de sortie du circuit déphaseur et d'un signal déduit du signal de différence (ou du signal reçu),

- un accumulateur (73) pour accumuler lesdits produits du début jusqu'à la fin d'un intervalle de temps $[p_2]$ de durée LT,

et en ce que les accumulateurs sont remis à zéro au début dudit intervalle de temps de calcul et des moyens sont prévus pour bloquer l'arrivée desdits produits pondérés à l'entrée des accumulateurs à la fin de cet intervalle de temps.

**12.** Dispositif selon la revendication 10, caractérisé en ce qu'il comporte pour le calcul des N coefficients du filtre transversal de l'annuleur d'écho, un autre filtre transversal à L coefficients, recevant comme signal d'entrée le signal de différence (ou le signal reçu), utilisant comme coefficient les valeurs conjuguées de L données stockées pendant le temps de calcul dans une mémoire, et fournissant un signal de sortie qui est pondéré par le coefficient de pondération $1/L\sigma^2$ et qui est transmis à travers une fenêtre temporelle ayant la durée NT, de façon à former en série les N coefficients désirés du filtre transversal de l'annuleur d'écho.

**Claims**

1. Method of reducing the convergence time of an echo canceller which forms part of a system comprising at least two transceiver arrangements, one of which being called local arrangement and the other being called remote arrangement, this echo canceller which is connected in a transceiver arrangement between a one-way transmit and a one-way receive path which are coupled to a two-way path (6) is used to cancel an echo signal produced with frequency off-set in the receive path in response to a signal supplied to the transmit path, comprising a transversal filter having N controllable coefficients (15) for processing a signal derived from the signal supplied to the transmit path, a difference circuit (17) for forming a difference signal which is the difference between two signals which are formed from the signal in the receive path and the output signal of the transversal filter respectively, and a phase-shifting circuit (60) connected between the output of the transversal filter and an input of the difference circuit and which receives from a phase generator a similated phase so as to compensate in the difference signal for the phase of the echo signal, this method being based on:

  - transmitting in the local arrangement a training data signal D(n) constituted by data transmitted at instants nT, periodically occurring after a period of time LT at least equal to NT and having the property P1:

$$\sum_{n=0}^{L-1} d(n) \cdot d^*[(n-i)\text{modulo } L]=0 \quad \text{for } i \neq 0 \text{ and } 1 \leq i \leq N-1$$

or the property P2:

$$\sum_{n=0}^{L-1} d(n) \cdot d^*[(n-i)\text{modulo } L]=-1 \quad \text{for } i \neq 0 \text{ and } 1 \leq i \leq N-1$$

where d and d* are the value of a datum of the signal D(n) and its conjugate value respectively;
  - calculating the coefficients of the transversal filter carried out after the instant of appearance of the echo signal produced in response to said training signal in accordance with the expression:

$$\vec{C} = \vec{C}_o + \frac{1}{L\sigma^2} \sum_{n=0}^{L-1} e(n) \cdot \vec{D}^*(n)$$

where $\vec{C}_0$ and $\vec{C}$ are the vectors of the N coefficients of the transversal filter at the beginning and at the end of the period of calculating the coefficients respectively,
e(n) is the difference signal,
$\vec{D}^*(n)$ is the vector of the complex conjugate values of the N data stored in the transversal filter,
$\sigma^2$ is a constant term representative of the power of each of the transmitted data, this method comprising at least the following operations:
  - transmitting said training data signal D(n) during two time intervals $[p_1]$, $[p_2]$ each lasting for said time interval LT, during which the phase of the echo signal has values $\phi(p_1)$ and $\phi(p_2)$ which are each substantially constant, the space between said two intervals being chosen so that $\phi(p_2) - \phi(p_1)$ has an appreciable magnitude;
  - during the time interval $[p_1]$, calculating the coefficients of the transversal filter;
  - during the time interval $[p_2]$:
    . maintaining the coefficients of the transversal filter at their calculated values,
    . maintaining the simulated phase applied to said phase-shifting circuit at zero,
    . calculating a quantity $s(p_2)$ formed by accumulating products of two factors, one derived from the output signal of the phase shifting circuit and the other from the difference signal (or from the received signal); and
  - at the end of the time interval $[p_2]$ a processing operation to derive from the quantity $s(p_2)$ the phase difference term $\phi(p_2) - \phi(p_1)$ and a processing operation to derive from said phase difference term a phase variation term $\Delta\omega.T$ formed by using the expression:

$$\Delta\omega \;=\; \frac{\phi(p_2) \;-\; \phi(p_1)}{t_2 \;-\; t_1}$$

where $\Delta\omega$ is the pulse variation corresponding to the frequency off-set, $t_2 - t_1$ is the average time difference between the time intervals $[p_2]$ and $[p_1]$ , the two terms thus formed being used to initialize said phase generator circuit.

2. Method as claimed in claim 1, used in an echo canceller in which the difference signal e(n) is a complex signal resulting from the difference between two complex signals, one derived from the received signal and the other from the output signal of the transversal filter, characterized in that the coefficients $\tilde{C}$ of the transversal filter and said quantity $s(p_2)$ are calculated while transmitting a single training data signal D(n).

3. Method as claimed in claim 1, used in an echo canceller in which the difference signal e(n) is a real signal resulting from the difference between two real signals, one derived from the received signal and the other from the output signal of the phase shifting circuit, characterized in that the coefficients C of the transversal filter are obtained by forming the sum of coefficients calculated while transmitting a first training data signal D(n) and of coefficients calculated while transmitting a second training data signal $D_+ (n) = jD(n)$ and said quantity $s(p_2)$ is obtained by forming the sum of a calculated quantity $s_1(p_2)$ while transmitting the first training data signal D(n) and of a calculated quantity $s_2(p_2)$ while transmitting the second training data signal $D_+(n)$.

4. Method as claimed in one of the claims 2 or 3, characterized in that the calculation of a quantity $s(p_2)$, $s_1(p_2)$ or $s_2(p_2)$ is carried out in accordance with one of the two expressions:

$$\left[ \sum_{n=0}^{L-1} \hat{\epsilon}_f^{\,*}(n)\cdot\epsilon_f(n) \right] \cdot \frac{1}{L\sigma^2}$$

$$\left[ \sum_{n=0}^{L-1} \hat{\epsilon}_f^{\,*}(n)\cdot e_f(n) \right] \cdot \frac{1}{L\sigma^2}$$

where $\hat{\epsilon}_f^{\,*}(n)$ is the conjugate value of the signal $\hat{\epsilon}_f(n)$ supplied by the phase-shifting circuit, and $\epsilon_f(n)$ is a complex or a real signal derived from the received signal.

5. Method as claimed in claim 3, characterized in that the calculation of a quantity $s_1(p_2)$ and $s_2(p_2)$ is carried out in accordance with either of the two expressions:

$$\left[ \sum_{n=0}^{L-1} \epsilon_f^{I}(n)\cdot\epsilon_f(n) \right] \cdot \frac{1}{L\sigma^2}$$

where

$$\varepsilon_f^{I}(n)$$

is the imaginary part of the signal supplied by the phase

28

$$\left[\sum_{n=0}^{L-1} \epsilon_f^I(n) \cdot e_f(n)\right] \cdot \frac{1}{L\sigma^2}$$

shifting circuit.

6. Method as claimed in claim 4, characterized in that the processing operation at the end of the time interval $[p_2]$ to form the phase difference $\phi(p_2) - \phi(p_1)$ consists of calculating this phase difference in accordance with the expression:

$$\phi(p_2) - \phi(p_1) = \text{Arc tg} \frac{I_m[s(p_2)]}{R_e[s(p_2)]},$$

where Re $[s(p_2)]$ and Im$[s(p_2)]$ respectively, are the real part and the imaginary part of the quantity s-$(p_2)$.

7. Method as claimed in claim 4, characterized in that during the time interval $[p_2]$ the quantity $r(p_2)$ is calculated, in addition, in accordance with either of the two expressions:

$$r(p_2) = \left[\sum_{n=0}^{L-1} \epsilon_f(n) \cdot \epsilon_f^*(n)\right] \cdot \frac{1}{L\sigma^2}$$

$$r(p_2) = \left[\sum_{n=0}^{L-1} \hat{\epsilon}_f^*(n) \cdot \hat{\epsilon}_f^*(n)\right] \cdot \frac{1}{L\sigma^2}$$

and the processing operation at the end of the time interval $[p_2]$ to form the phase difference $\phi(p_2) - \phi(p_1)$ consists of:
- updating an auxiliary variable INT in accordance with the recursion formula:

INT $(m+1) = $ INT$(m) + \gamma.\text{Im}[s(p_2)] - \gamma.\text{INT}(m).r(p_2)$

at a high rate, so that the auxiliary variable practically attains its final value INT $(\infty)$ within a relatively short time,
- calculating the phase difference $\phi(p_2) - \phi(p_1)$ in accordance with the expression:

$\phi(p_2) - \phi(p_1) = $ arc sin INT$(\infty)$.

8. Method as claimed in claim 4, characterized in that the processing operation at the end of the time interval $[p_2]$ to form the phase difference $\phi(p_2) - \phi(p_1)$ consists of updating an auxiliary variable $\text{INT}_0$ in accordance with the recursion formula:

$\text{INT}_0(m+1) = \text{INT}_0(m) - \gamma.\text{Im}[s^*(p_2).\exp.j.\text{INT}_0(m)]$

at a high rate, so that the auxiliary variable practically attains its final value within a relatively short time, said final value being equal to the phase difference $\phi(p_2) - \phi(p_1)$.

9. Method as claimed in claim 8, characterized in that the phase variation $\Delta\omega.T$ is obtained by updating said auxiliary variable $\text{INT}_0$ in accordance with the recursion formula:

29

$$INT_o(m+1) = INT_o(m) - \gamma.\text{Im}[s^*(p_2).\exp.j.\frac{INT_o(m)}{t_2-t_1}]$$

at a high rate, so that the auxiliary variable practically attains its final value within a relatively short time, said final value being equal to the phase variation $\Delta\omega.T$.

10. Apparatus for carrying out a method as claimed in one of the claims 1 to 9, comprising:
- in the local arrangement, a generator (25) of training data signals D(n) constituted by data transmitted at instants nT, periodically occurring after a period of time LT at least equal to NT and having the property P1:

$$\sum_{n=0}^{L-1} d(n) . d^*[(n-i)\text{modulo } L]=0 \quad \text{for } i \neq 0 \text{ and } 1 \leq i \leq N-1$$

or the property P2:

$$\sum_{n=0}^{L-1} d(n) . d^*[(n-i)\text{modulo } L]=-1 \quad \text{for } i \neq 0 \text{ and } 1 \leq i \leq N-1$$

where d and d* are the value of a datum of the signal D(n) and its conjugate value respectively;
- a control circuit (16) for calculating the coefficients of the transversal filter carried out after the instant of appearance of the echo signal produced in response to said training data signal in accordance with the expression:

$$\vec{C} = \vec{C}_o + \frac{1}{L\sigma^2} \sum_{n=0}^{L-1} e(n) \cdot \vec{D}^*(n)$$

where $\vec{C}_0$ and $\vec{C}$ are the vectors of the N coefficients of the transversal filter at the beginning and at the end of the period of calculating the coefficients respectively,
e(n) is the difference signal,
$\vec{D}^*(n)$ is the vector of the complex conjugate values of the N data stored in the transversal filter,
$\sigma^2$ is a constant term representative of the power of each of the transmitted data,
- means for activating said generator during two time intervals [$p_1$], [$p_2$] each having said duration LT, in the course of which the phase of the echo signal has the values $\phi(p_1)$, $\phi(p_2)$, each being substantially constant, the space between said two intervals being chosen so that $\phi(p_2) - \phi(p_1)$ has an appreciable magnitude;
- means for activating said control circuit during the time interval [$p_1$], means for activating during the time interval [$p_2$]:
  . means for maintaining the coefficients of the transversal filter at their calculated values,
  . means for maintaining the simulated phase applied to said phase-shifting circuit at zero,
  . means for calculating a quantity $s(p_2)$(73) formed by accumulating products of two factors, one derived from the o output signal of the phase shifting circuit and the other from the difference signal or the received signal,
and:
- processing means (74) for deriving from the quantity $s(p_2)$ at the end of the time interval [$p_2$] the phase difference term $\phi(p_2) - \phi(p_1)$ by calculating the argument [$S(p_2)$] and to derive from said phase difference a phase variation term $\Delta\omega.T$ formed by using the expression:

$$\Delta\omega = \frac{\phi(p_2) - \phi(p_1)}{t_2 - t_1}$$

where $\Delta\omega$ is the pulse variation corresponding to the frequency off-set, $t_2 - t_1$ is the average time difference between the time intervals $[p_2]$ and $[p_1]$, the two terms thus formed being used to initialize said phase generator circuit.

11. Apparatus as claimed in claim 10, characterized in that it comprises for the calculation of the coefficients of the transversal filter of the echo canceller:
- calculation means (28) for forming at each instant nT the products of the N conjugate values of the N data stored in the transversal filter and the difference signal or the received signal,
- calculation means (29) for weighting these products by the weighting coefficient $1/(L\sigma^2)$,
- accumulators (33) for accumulating the weighted products from the beginning to the end of the calculation time interval of a duration LT, the desired coefficients of the transversal filter being simultaneously obtained in said accumulators at the end of said time interval,
- calculation means (62) for forming at each instant nT the product of a signal derived from the output signal of the phase shifting circuit and a signal derived from the difference signal (or the received signal),
- an accumulator (73) for accumulating said products from the beginning to the end of a time interval $[p_2]$ of a duration LT,
and in that the accumulators are reset to zero at the beginning of said calculation time interval and in that means are provided for blocking the arrival of said weighted products at the input of the accumulators at the end of said time interval.

12. Apparatus as claimed in claim 10, characterized in that for calculating the N coefficients of the transversal filter of the echo canceller said apparatus comprises another transversal filter having L coefficients, which receives the difference signal (or the received signal) as the input signal, uses the conjugate values of L data stored in a memory during the calculation time interval as coefficients and produces an output signal which is weighted by the weighting coefficient $1/(L\sigma^2)$ and transmitted through a time window having duration NT, so that the N desired coefficients of the transversal filter of the echo canceller are formed simultaneously.

## Patentansprüche

1. Verfahren zur Verkürzung der Konvergenzzeit eines Echokompensators, der einen Teil eines System bildet, das mindestens zwei Sende-Empfangsgeräte aufweist, von denen das eine als Ortsgerät bezeichnet wird und das andere als Ferngerät, wobei dieser Echokompensator in einem Sende-Empfangsgerät vorgesehen ist, und zwar zwischen zwei Einwegsende-und-empfangsstrecken, die mit einer Zweiwegstrecke (6) gekoppelt sind und wobei dieser Echokompensator zum Kompensieren eines mit einer Frequenzabweichung in der Empfangsstrecke in Antwort auf ein der Sendestrecke zugeführtes Signal erzeugten Echosignals benutzt wird, wobei dieser Echokompensator ein Transversalfilter (15) mit N regelbaren Koeffizienten aufweist zum Verarbeiten eines von dem der Sendestrecke zugeführten Signal abgeleiteten Signals sowie eine Differenzschaltung (17) aufweist zum Erzeugen eines Differenzsignals zwischen zwei aus dem Signal in der Empfangsstrecke und dem Ausgangssignal des Transversalfilters gebildeten Signalen, und eine Phasenschieberschaltung (60) aufweist, die zwischen dem Ausgang des Transversalfilters und einem Eingang der Differenzschaltung vorgesehen ist und die von einem Phasengenerator eine simulierte Phase erhält zum Kompensieren der Phase des Echosignals in dem Differenzsignal , wobei dieses Verfahren auf Folgendem basiert ist:
- auf der Ausstrahlung aus dem Ortsgerät eines Lehrdatensignals D(n), das besteht aus Daten, die zu den Zeitpunkten nT ausgestrahlt wurden, wobei dieses Signal nach einer Dauer LT wenigstens entsprechend NT periodisch auftritt und der nachfolgenden Eigenschaft P1 entspricht:

$$\sum_{n=0}^{L-1} d(n) \cdot d^*[(n-i)\text{modulo } L] = 0 \quad \text{fuer } i \neq 0 \text{ und } 1 \leq i \leq N-1$$

oder der Eigenschaft P2 entspricht:

$$\sum_{n=0}^{L-1} d(n) \cdot d^*[(n-i)\text{modulo } L] = -1 \quad \text{fuer } i \neq 0 \text{ und } 1 \leq i \leq N-1$$

j wobei d und d* der Wert eines Datums des Signals D(n) bzw. der konjugierte Wert ist,

- auf der Tatsache, daß die Berechnung der Koeffizienten des Transversalfilters nach dem Auftrittszeitpunkt des Echosignals erfolgt, das durch das genannte Lehrsignal entsprechend dem nachfolgenden Ausdruck erzeugt wird:

$$\vec{C} = \vec{C}_o + \frac{1}{L\sigma^2} \sum_{n=0}^{L-1} e(n) \cdot \vec{D}^*(n)$$

wobei $\vec{C}_0$ und $\vec{C}$ die Vektoren der N Koeffizienten des Transversalfilters am Anfang bzw. am Ende der Berechnungsdauer der Koeffizienten sind,

wobei e(n) das Differenzsignal ist,

wobei $\vec{D}^*$ der Vektor der konjugierten Werte der N in dem Transversalfilter gespeicherten Daten ist,

wobei $\sigma^2$ ein konstanter Term ist, der für die Leistung jedes ausgestrahlten Datums repräsentativ ist, wobei dieses Verfahren mindestens die nachfolgenden Verfahrensschritte aufweist:

- die Ausstrahlung des genannten Lehrsignals D(n) während zwei Zeitintervalle [$p_1$], [$p_2$] mit je einer Dauer LT, in welcher Zeit die Phase des Echosignals die nachfolgenden Werte hat $\phi(p_1)$, $\phi(p_2)$, die je nahezu konstant sind, wobei die Differenz zwischen diesen beiden Intervallen derart gewählt ist, daß $\phi(p_2) - \phi(p_1)$ eine akzeptierbare Größe ist;
- während des Zeitintervalls [$p_1$], die Berechnung der Koeffizienten des Transversalfilters,
- während des Zeitintervalls [$p_2$]
  . das auf dem berechneten Wert Beibehalten der Koeffizienten des Transversalfilters,
  . das auf dem Wert Null Beibehalten der auf die Phasenschieberschaltung angewandten simulierten Phase,
  . die Berechnung einer Größe s($p_2$), die durch Speicherung der Produkte aus den zwei abgeleiteten Faktoren, von denen der eine von dem Ausgangssignal der Phasenschieberschaltung und der andere von dem Differenzsignal (oder dem empfangenen Signal) abgeleitet ist;
- am Ende des Zeitintervalls [$p_2$] eine Verarbeitung zum von der Größe s($p_2$) Herleiten des Termes der Phasendifferenz $\phi(p_2) - \phi(p_1)$ und eine Verarbeitung zum von dieser Phasendifferenz Herleiten eines Phasenänderungstermes $\Delta\omega.T$, der unter Benutzung des nachfolgenden Ausdrucke gebildet wird:

$$\vec{C} = \vec{C}_o + \frac{1}{L\sigma^2} \sum_{n=0}^{L-1} e(n) \cdot \vec{D}^*(n)$$

wobei $\Delta\omega$ die Impulsänderung entsprechend der Frequenzabweichung ist, $t_2 - t_1$ die mittlere Zeitdifferenz zwischen den Zeitintervallen [$p_2$] und [$p_1$] ist, wobei die beiden auf diese Weise gebildeten Terme zur Initialisierung der genannten Phasengeneratorschaltung benutzt werden.

2. Verfahren nach Anspruch 1, angewandt bei einem Echokompensator, bei dem das Differenzsignals e(n) ein komplexes Signal ist, das das Ergebnis der Differenz zwischen zwei komplexen Signalen ist, von denen das eine Signal von dem empfangenen Signal abgeleitet ist und das andere Signal von dem Ausgangssignal der Phasenschieberschaltung abgeleitet ist, dadurch gekennzeichnet, daß die Koeffizienten $\vec{C}$ des Transversalfilters und die genannte Größe s($p_2$) dadurch berechnet worden sind, daß nur ein einziges Lehrsignal D(n) ausgestrahlt wurde.

**3.** Verfahren nach Anspruch 1, angewandt bei einem Echokompensator, bei dem das Differenzsignal e(n) ein reelles Signal ist, das hervorgeht aus der Differenz zwischen zwei reellen Signalen, von denen das eine Signal von dem empfangenen Signal und das andere von dem Ausgangssignal der Phasenschieberschaltung abgeleitet ist, dadurch gekennzeichnet, daß die Koeffizienten C des Transversalfilters dadurch erhalten werden, daß die Summe gebildet wird aus denjenigen Koeffizienten, die berechnet werden indem ein erstes Lehrsignal D(n) ausgestrahlt wird, und aus denjenigen Koeffizienten, die berechnet werden indem ein zweiten Lehrsignal $D_+(n) = jD(n)$ ausgestrahlt wird, und wobei die genannte Größe $s(p_2)$ dadurch erhalten wird, daß die Summe gebildet wird aus einer Größe $s_1(p_2)$, die dadurch berechnet wird, daß das erste Lehrsignal D(n) ausgestrahlt wird, und aus einer Größe $s_2(p_2)$, die dadurch berechnet wird, daß das zweite Lehrsignal $D_+(n)$ ausgestrahlt wird.

**4.** Verfahren nach einem der Ansprüche 2 oder 3, dadurch gekennzeichnet, daß die Berechnung einer Größe $s(p_2)$, $s_1(p_2)$ oder $s_2(p_2)$ nach dem einen oder dem anderen der beiden nachfolgenden Ausdrücke erfolgt:

$$\left[ \sum_{n=0}^{L-1} \hat{\epsilon}_f^*(n) \cdot \epsilon_f(n) \right] \cdot \frac{1}{L\sigma^2}$$

$$\left[ \sum_{n=0}^{L-1} \hat{\epsilon}_f^*(n) \cdot e(n) \right] \cdot \frac{1}{L\sigma^2}$$

wobei $\hat{\epsilon}_f^*(n)$ den von der Phasenschieberschaltung erhaltenen konjugiert-komplexen Wert des Echokopiesignals $\hat{\epsilon}_f(n)$, und $\epsilon_f(n)$ von dem empfangenen Signal abgeleitetes, komplexes oder reelles Signal darstellen.

**5.** Verfahren nach Anspruch 3, dadurch gekennzeichnet, daß die Berechnung der Größe $s_1(p_2)$ oder $s_2(p_2)$ nach dem einen oder dem anderen der beiden nachfolgenden Ausdrücke erfolgt:

$$\left[ \sum_{n=0}^{L-1} \epsilon_f^I(n) \cdot \epsilon_f(n) \right] \cdot \frac{1}{L\sigma^2}$$

$$\left[ \sum_{n=0}^{L-1} \epsilon_f^I(n) \cdot e(n) \right] \cdot \frac{1}{L\sigma^2}$$

wobei $\epsilon_f^I(n)$ der imaginäre Teil des von der Phasenschieberschaltung gelieferten Signals ist.

**6.** Verfahren nach Anspruch 4, dadurch gekennzeichnet, daß die Bearbeitung am Ende des Zeitintervalls $[p_2]$ zum Bilden der Phasendifferenz $\phi(p_2) - \phi(p_1)$ aus der Berechnung dieser Phasendifferenz nach dem folgenden Ausdruck besteht:

$$\Phi(p_2) - \Phi(p_1) = \text{Arc tg} \, \frac{I_m[s(p_2)]}{R_e[s(p_2)]},$$

wobei $R_e[s(p_2)]$ und $I_m[s(p_2)]$ den reellen bzw. den imaginären Teil der Größe $s(p_2)$ darstellen.

**7.** Verfahren nach Anspruch 4, dadurch gekennzeichnet, daß während des Zeitintervalls $[p_2]$ außerdem die Größe $r(p_2)$ nach dem einen oder dem anderen der beiden nachfolgenden Ausdrücke berechnet wird:

$$r(p_2) = \left[ \sum_{n=0}^{L-1} \epsilon_f(n).\epsilon_f^*(n) \right] . \frac{1}{L\sigma^2}$$

$$r(p_2) = \left[ \sum_{n=0}^{L-1} \hat{\epsilon}_f^*(n).\hat{\epsilon}_f^*(n) \right] . \frac{1}{L\sigma^2}$$

und wobei die Bearbeitung am Ende des Zeitintervalls $[p_2]$ zum Bilden der Phasendifferenz $\phi(p_2)$ - $\phi(p_1)$ aus den nachfolgenden Verfahrensschritten besteht:

- der Aktualisierung einer Hilfsveränderlichen INT gemäß der nachfolgenden Rekursionsformel:

$$INT(m+1) = INT(m) + \gamma.I_m [s(p_2)] - \gamma INT(m).r(p_2)]$$

mit einer derart hohen Taktimpulsfrequenz, daß die Hilfsveränderliche in einer relativ kurzen Zeit praktisch den Endwert $INT(\infty)$ erreicht,
- der Berechnung der Phasendifferenz $\phi(p_2)$ - $\phi(p_1)$ gemäß dem folgenden

Ausdruck: $\phi(p_2)$ - $\phi(p_1) = arc\ sin\ INT(\infty)$.

8. Verfahren nach Anspruch 4, dadurch gekennzeichnet, daß die Bearbeitung am Ende des Zeitintervalls $[p_2]$ zum Bilden der Phasendifferenz $\phi(p_2)$ - $\phi(p_1)$ aus der Aktualisierung einer Hilfsveränderlichen $INT_0$ nach der Rekursionsformel

$$INT_0(m+1) = INT_0(m) - \gamma.I_m [s^*(p_2).exp.j.INT_0(n)]$$

mit einer derart hohen Taktimpulsfrequenz, daß die Hilfsveränderliche in einer relativ kurzen Zeit praktisch den Endwert erreicht, wobei dieser Endwert der Phasendifferenz $\phi(p_2)$ - $\phi(p_1)$ entspricht.

9. Verfahren nach Anspruch 8, dadurch gekennzeichnet, daß die Phasenänderung $\Delta\omega.T$ durch Aktualisierung der genannten Hilfsveränderlichen $INT_0$ nach der untenstehenden Rekursionsformel erhalten wird:

$$INT_0(m+1) = INT_0(m) - \gamma.I_m \left[ s^*(p_2).exp.j.\frac{INT_0(m)}{t_2-t_1} \right]$$

mit einer derart hohen Taktimpulsfrequenz, daß die Hilfsveränderliche in einer relativ kurzen Zeit praktisch den Endwert erreicht, wobei dieser Endwert der Phasenänderung $\Delta\omega.T$ entspricht.

10. Anordnung zum Durchführen des Verfahrens nach einem der Ansprüche 1 bis 9, mit:
- einem in dem Ortsgerät vorgesehenen Generator (25) für ein Lehrdatensignal $D(n)$, das aus den zu dem Zeitpunkt $nT$ ausgestrahlten Daten besteht, und das sich periodisch nach einer Dauer $LT$, mindestens gleich $NT$, wiederholt und der folgenden Eigenschaft P1 entspricht:

$$\sum_{n=0}^{L-1} d(n).d^*[(n-i)\ modulo\ L] = 0 \quad \text{für } i \neq 0 \text{ und } 1 \leq i \leq N-1$$

oder der Eigenschaft P2 entspricht:

$$\sum_{n=0}^{L-1} d(n) \cdot d^*[(n-i)\,\text{modulo}\,L] = -1 \text{ für } i \neq 0 \text{ und } 1 \leq i \leq N-1$$

wobei d und d* der Wert eines Datums des Signals D(n) bzw. der konjugierte Wert ist,

- einem Regelkreis (16) zur Berechnung der Koeffizienten des Transversalfilters, was nach dem Erscheinungszeitpunkt des mittels des genannten Lehrsignals erzeugten Echosignals gemäß dem nachfolgenden Ausdruck erfolgt:

$$\vec{C} = \vec{C}_o + \frac{1}{L\sigma^2} \sum_{n=0}^{L-1} e(n) \cdot \vec{D}^*(n)$$

wobei $\vec{C}_0$ und $\vec{C}$ die Vektoren der N Koeffizienten des Transversalfilters am Anfang bzw. am Ende der Koeffizientenberechnungsdauer sind,

wobei e(n) das Differenzsignal ist,

wobei $\vec{D}^*$ der Vektor der konjugierten Werte der N in dem Transversalfilter gespeicherten Daten ist,

wobei $\sigma^2$ ein konstanter Term ist, der für die Leistung jedes ausgestrahlten Datums repräsentativ ist,

- Mitteln zum Aktivieren des genannten Generators während zweier Zeitintervalle $[p_1]$, $[p_2]$ mit je der genannten Dauer LT, in welcher Zeit die Phase des Echosignals die nachfolgenden Werte hat $\phi(p_1)$, $\phi(p_2)$, die je nahezu konstant sind, wobei die Differenz zwischen diesen beiden Intervallen derart gewählt ist, daß $\phi(p_2) - \phi(p_1)$ eine akzeptierbare Größe ist;

- Mitteln zum Aktivieren des genannten Regelkreises während des Zeitintervalls $[p_1]$, Mitteln um während des Zeitintervalls $[p_2]$ die nachfolgenden Mittel zu aktivieren:

   . Mittel zum dem berechneten Wert Beibehalten der Koeffizienten des Transversalfilters,

   . Mittel zum auf dem Wert Null Beibehalten der der Phasenschieberschaltung zugeführten simulierten Phase,

   . Mittel (73) zur Berechnung einer Größe $s(p_2)$, die durch Speicherung der Produkte aus den zwei abgeleiteten Faktoren, von denen der eine von dem Ausgangssignal der Phasenschieberschaltung und der andere von dem Differenzsignal oder dem empfangenen Signal abgeleitet ist, gebildet ist;

und:

- Mitteln (74) zum am Ende des Zeitintervalls $[p_2]$ von der Größe $s(p_2)$ Herleiten des Termes der Phasendifferenz $\phi(p_2) - \phi(p_1)$ durch Berechnung des Argumentes $[s(p_2)]$ und zum von dieser Phasendifferenz Herleiten eines Phasenänderungstermes $\Delta\omega.T$, der unter Benutzung des nachfolgenden Ausdrucks gebildet wird:

$$\Delta\omega = \frac{\phi(p_2) - \phi(p_1)}{t_2 - t_1}$$

wobei $\Delta\omega$ die Impulsänderung entsprechend der Frequenzabweichung ist, $t_2 - t_1$ die mittlere Zeitdifferenz zwischen den Zeitintervallen $[p_2]$ und $[p_1]$ ist, wobei die beiden auf diese Weise gebildeten Terme zum Aktivieren der genannten Phasengeneratorschaltung benutzt werden.

11. Anordnung nach Anspruch 10, dadurch gekennzeichnet, daß diese zum Berechnen der Koeffizienten des Transversalfilters des Echokompensators die nachfolgenden Mittel aufweist:

- Berechnungsmittel (28) zum zu jedem Zeitpunkt nT Bilden der Produkte aus den N konjugierten Werten der in dem Transversalfilter gespeicherten N Daten und dem Differenzsignal oder dem empfangenen Signal,

- Berechnungsmittel (29) zum Gewichten der Produkte durch den Gewichtungskoeffizienten $1/L\sigma^2$,

- Akkumulatormittel (33) zum Speichern der gewichteten Produkte vom Anfang bis zum Ende des Berechnungszeitintervalls mit der Dauer LT, wobei am Ende des genannten Zeitintervalls die erwünschten Koeffizienten des Transversalfilters in diesen Akkumulatoren simultan erhalten werden,

- Berechnungsmittel (62) zum zu jedem Zeitpunkt nT Bilden des Produktes aus einem von dem Ausgangssignal der Phasenschieberschaltung abgeleiteten Signal und einem von dem Differenzsignal (oder dem empfangenen Signal) abgeleiteten Signal,
- einen Akkumulator (73) zum Speichern der genannten Produkte vom Anfang bis zum Ende eines Zeitintervalls [$p_2$] mit der Dauer LT,

und daß die Akkumulatoren am Anfang des genannten Berechnungszeitintervalls auf Null rückgestellt werden und daß Mittel vorgesehen sind zum Sperren der Ankunft der gewichteten Produkte am Eingang der Akkumulatoren am Ende dieses Zeitintervalls.

12. Anordnung nach Anspruch 10, dadurch gekennzeichnet, daß sie zum Berechnen der Koeffizienten des Transversalfilters des Echokompensators ein anderen Transversalfilter mit L Koeffizienten aufweist, das als Eingangssignal das Differenzsignal (oder das empfangene Signal) erhält, wobei als Koeffizient die konjugierten Werte der während der Berechnungszeit in einem Speicher gespeicherten L Daten verwendet werden, und wobei ein Ausgangssignal geliefert wird, das durch den Gewichtungskoeffizienten $1/L\sigma^2$ gewichtet wird und durch ein Zeitfenster mit der Dauer NT derart übertragen wird, daß in Reihe die N erwünschten Koeffizienten des Transversalfilters des Echokompensators gebildet werden.

FIG.1

FIG.2

EP 0 270 706 B1

FIG.3

FIG.4

38

FIG.5

FIG.6

FIG.7

FIG.8

FIG.9

$\phi(p_2) - \phi(p_1)$

FIG.10

$\phi(p_2) - \phi(p_1)$